# FASCICULE DE BREVET EUROPEEN

(11) **EP 2 382 756 B1**
(45) Date de publication et mention de la délivrance du brevet: **22.08.2018**
(21) Numéro de dépôt: 09807448.7
(22) Date de dépôt: 31.12.2009
(51) Int. Cl.: H04M 1/725, H04N 7/173, H04N 19/30, H04N 19/51, H04N 19/61, H04N 19/85, H04N 21/2343, H04N 21/2381, H04N 21/2383, H04N 21/414, H04N 21/431, H04N 21/434, H04N 21/44, H04N 21/422, H04L 29/06, H04L 29/08

(54) **PROCÉDÉ DE MODÉLISATION PAR MACROBLOCS DE L'AFFICHAGE D'UN TERMINAL DISTANT À L'AIDE DE CALQUES CARACTÉRISÉS PAR UN VECTEUR DE MOUVEMENT ET DES DONNÉES DE TRANSPARENCE**
VERFAHREN ZUR MODELLISIERUNG DER ANZEIGE EINES ENDGERÄTES DURCH MACROBLOCKS MITTELS DURCH BEWEGUNGSVEKTOR UND DURCHSICHTIGKEITSDATEN GEKENNZEICHNETEN MASKEN
MODELISATION METHOD OF THE DISPLAY OF A REMOTE TERMINAL USING MACROBLOCKS AND MASKS CARACTERIZED BY A MOTION VECTOR AND TRANSPARENCY DATA

(30) Priorité: 31.12.2008 FR 0859173; 31.12.2008 FR 0859174; 31.12.2008 FR 0859175; 31.12.2008 FR 0859176; 31.12.2008 FR 0859177
(43) Date de publication de la demande: 02.11.2011
(73) Titulaire: Lewiner, Jacques, 92210 Saint-Cloud (FR); Libault, David, 75003 Paris (FR)
(72) Inventeur: LIBAULT, David, F-75003 Paris (FR); GONZALEZ, Jérôme, F-75010 Paris (FR)
(74) Mandataire: Fragnaud, Aude
(86) Numéro de dépôt international: PCT/FR2009/001492
(87) Numéro de publication internationale: WO 2010/076436

(56) Documents cités:
- EP-A- 0 414 017
- EP-A- 0 475 648
- WO-A-01/31497
- WO-A-97/13220
- WO-A-03/045045
- WO-A-2006/036069
- WO-A-2008/007228
- FR-A- 2 870 374
- US-A1- 2005 018 768
- US-B1- 6 288 704

## Description

La présente invention concerne un procédé de communication entre un serveur et un terminal et plus particulièrement un dispositif de modélisation d'un affichage.

Des modes de réalisation de l'invention peuvent trouver leur application dans un domaine où un terminal mobile utilise une application pour accéder à un service, par exemple. Ces modes de réalisation de l'invention pourraient être employés dans le cadre d'un système permettant d'afficher, sur un terminal, un affichage, par exemple une interface utilisateur d'une application s'exécutant sur un serveur distant au terminal.

Dans ce contexte une application peut consister par exemple à consulter des informations comme la météo, des cours de bourse, le solde d'un compte bancaire, un album de photographies, ou à diffuser un contenu multimédia comme des vidéos.

Pour fournir un service à un utilisateur sur son téléphone mobile, il existe deux solutions - installer une application sur le terminal de l'utilisateur ou utiliser le navigateur web du terminal pour accéder à une application distante.

Dans le premier cas, l'utilisateur doit télécharger un fichier, l'installer sur son combiné, puis demander au système d'exploitation de le lancer. Ce processus implique que l'exécutable téléchargé soit compatible au niveau binaire, et au niveau des ressources exploitées sur le combiné de l'utilisateur.

La technologie JAVA développée par Sun propose d'utiliser un code binaire universel pour toutes les applications et une "machine virtuelle" est installée sur chaque terminal. Cette machine virtuelle, spécifique à chaque type de terminal, traduit le code binaire universel en code binaire directement exécutable par le terminal. Outre la charge de calcul supplémentaire consommée par cette traduction, cette technologie ne résout pas le problème de la disparité de puissance de calcul, de mémoire et de taille d'écran du parc de terminaux mobiles déployés.

La technologie JAVA est aujourd'hui déployée sur la majorité des téléphones mobiles. Cependant, pour s'adapter à l'évolution des téléphones mobiles, et pour répondre au besoin 5des constructeurs de différencier leurs produits, les API JAVA ont évolué et se sont multipliées. Les versions JAVA diffèrent donc d'un terminal à l'autre suivant sa date d'apparition sur le marché, et la gamme de prix dans laquelle il se situe. Il est donc très complexe pour un éditeur de fournir une application déployable sur l'ensemble d'un parc hétérogène de terminaux mobiles.

Pour l'utilisateur, les étapes de recherche de la version de l'application compatible avec son terminal, de téléchargement, et d'installation sont rébarbatives, et constituent un réel un frein à son utilisation.

Dans le second cas, l'application s'exécute sur un serveur accessible par l'intermédiaire d'un réseau IP. Le navigateur web du terminal est utilisé pour afficher l'interface utilisateur produite par l'application sous forme de pages web plus ou moins sophistiquées. Ceci est utilisé par Google pour diverses applications : messagerie, agenda, traitement de texte, tableur etc...

La transposition de ce modèle à la téléphonie mobile présente plusieurs difficultés. En effet, les standards web évoluent rapidement, tirés par le marché des ordinateurs personnels : évolution du JavaScript, apparition de la technologie Flash, etc... D'une part, la puissance de calcul, la quantité de mémoire ainsi que les capacités d'affichage évoluent plus vite que pour les terminaux mobiles, ceux-ci étant fortement soumis au compromis poids, autonomie, encombrement. D'autre part, les ordinateurs personnels subissent des mises à jour logicielles régulières, souvent automatiques, qui leur permettent d'être à jour avec les dernières évolutions des standards web. Ce n'est pas le cas pour les téléphones mobiles pour deux raisons principales : chaque téléphone ayant un système d'exploitation spécifique voire pas de système d'exploitation, l'ensemble du firmware doit être modifié, testé puis validé, et ce, pour chaque modèle de combiné. Seul le fabricant peut effectuer cette opération complexe et donc coûteuse, ce qui, dans le cas des terminaux à bas prix n'est pas justifiée. Le coût de la bande passante data 3G reste élevé et fortement dépendant de l'opérateur ainsi que du type d'abonnement choisis par l'utilisateur, ce qui rend les modèles de mise à jour automatique inapplicables aujourd'hui.

De plus, les standards web ne sont pas adaptés aux écrans de petite taille. Les choix de polices de caractère, de disposition des divers éléments graphiques (titres, textes, images...), laissés au terminal donnent un rendu graphique hétérogène d'un mobile à l'autre suivant la résolution de l'écran, et les choix de l'organisation de l'affichage pris par le navigateur web embarqué.

La définition du WAP a été une tentative d'adapter les technologies web à la téléphonie mobile. Son échec est probablement dû à la disparité du rendu des pages sur chaque terminal, ainsi qu'à la pauvreté des possibilités d'affichage et à l'absence de rendu de type "rich media".

Dans le contexte de l'encodage vidéo, les critères permettant d'évaluer la qualité de l'encodage vidéo utilisé pour envoyer des données à un terminal incluent :
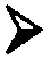 La consommation des ressources du serveur (mémoire/processeur) ;
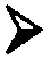 L'intervalle de temps entre la modification de l'image de l'interface utilisateur par l'application, et son affichage sur le terminal ;
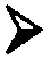 La qualité du rendu des images fixes ; et
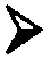 La robustesse du flux généré vis-à-vis de la perte de paquets inévitable sur un lien sans fil.

La consommation en ressources du système devrait être minimisée afin de maximiser le nombre de communications simultanées servies.

De plus, le délai généré par la compression/décompression des données devrait être minimisé afin d'offrir la meilleure réactivité de l'application aux sollicitations de l'utilisateur. Les informations fournies par une application étant, en partie, une succession de textes et d'images fixes, le rendu de ceux-ci devrait être optimal.

Par ailleurs dans un environnement sans-fil la perte de paquets est inévitable. Il est désirable donc de minimiser l'impact de telles pertes sur la qualité de l'image présentée par le terminal à l'utilisateur.

Les améliorations apportées au codeur dans ce contexte devraient l'être sans s'écarter des standards de compression vidéo normalisés. Dans le cas de la Visio 3G, par exemple, il s'agit des standards h263 ainsi que h264 au sein du protocole H324m.

H324m est un protocole de mise en place et de transport d'une conférence audiovisuelle sur un canal de télécommunication numérique bidirectionnel. C'est, en réalité, une famille de protocoles réunis et harmonisés.
- Le protocole H223 définit le multiplexage/démultiplexage des données.
- Le protocole H245 définit le format des trames permettant de négocier l'ouverture de canaux audio et vidéo ainsi que les codecs associés.
- Le protocole H263 définit l'encodage vidéo.
- Les protocoles G723.1 et 3GP-AMR définissent l'encodage audio.

Des techniques d'encodage vidéo classiques utilisées dans les principaux codecs vidéo actuels (MPEG2, H263, MPEG4, H264 et...) sont décrites dans la demande internationale WO97/13220 ainsi que dans Iain E.G. Richardson - H.264 and MPEG-4 vidéo compression. John Wiley & Sons Ltd., 2003 ISBN 0-470-84837.5.

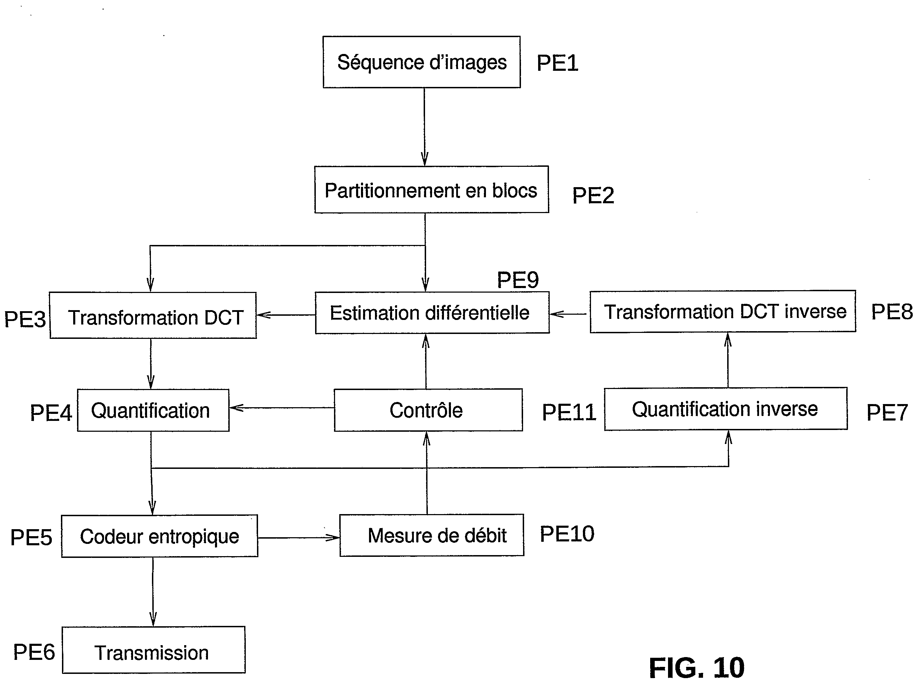

Un exemple d'un codeur vidéo typique est illustré à la figure 10. Dans ce système de codage les données à encoder arrivent à l'encodeur sous forme d'une suite d'images régulièrement espacées dans le temps (l'étape PE1). Chaque image est au format YUV. Le standard YUV est un modèle de représentation de la couleur des données vidéo. Si la séquence d'images est dans un autre format, par exemple RGB, alors une transformation vers le format YUV peut être effectuée.

Les images sont ensuite découpées en « macroblocs» lors d'une étape PE2 de partitionnement en blocs. Chaque standard définit la taille et le format de ces macroblocs. Dans le cas du standard H263 par exemple, chaque image est d'abord divisée en blocs de 8x8 pixels. Le format YUV définit Y pour chaque pixel de l'image, mais U et V sont moyennés sur 4 pixels. Le paramètre Y représente la luminance, tandis que U et V permettent de représenter la chrominance, c'est-à-dire l'information sur la couleur. Les blocs sont regroupés en macroblocs regroupant 4 blocs Y, 1 bloc U et 1 bloc V. Ainsi, dans ce cas, un macrobloc contient toutes les informations relative à une zone de 16x16 pixels de l'image.

Dans une étape PE3 de transformation DCT (discrète en cosinus), pour chaque macrobloc, chaque bloc constituant ce macrobloc est transformé à l'aide d'une transformation discrète en cosinus à 2 dimensions.

L'étape PE3 de transformation DCT est suivie par une étape PE4 de quantification. Cette étape consiste à diminuer le nombre de bits utilisés pour coder chaque coefficient résultat de la transformation DCT. Plus la quantification est importante plus la perte de qualité de l'image transmise sera importante.

L'étape PE5 de codage entropique PE5 est une étape de compression sans perte d'information. Chaque standard définit l'algorithme choisi. Les deux techniques de codage entropique les plus utilisées sont les méthodes de codes à longueur variable de Huffman modifié, et le codage arithmétique. Le codage entropique est utilisé pour compresser les coefficients quantifiés, les vecteurs de mouvements, les niveaux de quantification, et diverses informations permettant de décrire le format et le type d'image transmis.

Ensuite dans une étape PE6 de transmission, le flux des données vidéo obtenu est transmis au sein d'un canal précédemment ouvert à l'intérieur d'un lien H324m.

Une étape de quantification inverse PE7 est l'opération inverse de la quantification PE4. Une étape de transformation DCT inverse PE8 est l'opération inverse de la transformation DCT.

Dans une phase PE9 d'estimation différentielle, lorsqu'un macrobloc est encodé en mode différentiel, on effectue une différence entre l'image courante et l'image précédemment envoyée, telle qu'elle sera décodée. C'est la raison pour laquelle une quantification inverse et une transformation DCT inverse sont effectuées. Pour diminuer la quantité d'information à transmettre, un vecteur de translation est appliqué au macrobloc de l'image précédente afin qu'il s'approche au mieux de l'image courante. La recherche de ce vecteur est appelée « recherche des vecteurs de mouvement ». Cette différence est ensuite transformée, quantifiée puis encodée.

Dans une phase PE10 de mesure du débit pour le flux sortant du codeur devant être transmis dans un canal de communication à débit limité, on évalue la taille de chaque image encodée.

Le contrôle de l'encodeur PE11 constitue le coeur de l'encodeur. Cette fonction contrôle les paramètres de l'encodeur comme le niveau de quantification, le choix entre encodage absolu ou différentiel pour l'image, et pour chacun des macroblocs.

La fonction utilisant le plus de ressources dans ce type de codeur est l'estimation des vecteurs de mouvement à partir des images de la séquence d'entrée. De nombreuses publications et brevets proposent une grande variété d'algorithmes permettant de diminuer la puissance de calcul consommée par cette fonction. Certains algorithmes présentent de meilleures performances dans des environnements spécifiques. Dans le contexte d'encodage vidéo ce type d 'encodeur possède plusieurs inconvénients :

L'encodeur doit en permanence évaluer, à partir de la séquence d'images qui lui est présentée, pixel par pixel, les zones qui doivent être codées en différentiel ou en absolu, ainsi que des vecteurs de mouvements judicieux permettant de maximiser le rapport qualité de l'image, débit de données.

Une stratégie d'amélioration du rendu des images fixes consiste, par exemple, à diminuer le facteur de quantification et le nombre d'images encodées par unité de temps et garder ces paramètres constants.

Ceci ne peut être fait qu'après qu'une suite de n images aient été identifiées comme identiques. Soit un délai systématique de n images est ajouté ce qui détériore la réactivité de l'application, soit ces n premières images sont encodées avec la boucle de rétroaction classique, et le passage en mode "image fixe" sera visible dans la séquence encodée.

Dans le cas de séquences basées sur des images de synthèse, l'exploitation des informations utilisées lors dans la synthèse des images a été proposée pour guider l'algorithme de recherche de mouvement. Certains auteurs proposent de nouveaux modèles décrivant le mouvement par pixel ou par blocs de pixels de l'image, d'autres proposent d'utiliser ces informations dans le cadre d'un format de codage vidéo standard comme le MPEG.

Ces articles décrivent des systèmes de synthèse d'images "réalistes". Chaque surface est représentée par des polygones en 3 dimensions sur lesquels sont appliquées des textures en 2 dimensions. Divers algorithmes de projection et de shading sont utilisés pour convertir ces descriptions en images à 2 dimensions.

Toutefois un tel modèle n'est pas adapté à la description d'interfaces utilisateur en 2 dimensions. Il n'est pas non-plus adapté à la compression vidéo : des algorithmes complexes sont nécessaires pour évaluer le mouvement de chaque pixel en 2 dimensions à partir de la localisation et des mouvements et de chaque polygone.

Un autre inconvénient souvent rencontré dans ce domaine est que la taille des écrans des téléphones mobiles est parfois de petite taille. Le brevet US6288704 décrit un système permettant de visualiser sur un écran de petite taille une image virtuelle plus grande que celui-ci en détectant le mouvement de celui-ci à l'aide d'images acquises par une caméra solidaire. Dans le cas d'un téléphone mobile, ce système présente l'inconvénient de devoir installer une application sur le téléphone nécessitant une puissance de calcul conséquente nécessaire aux calculs de détection de mouvement.

Dans le contexte de la mise en ligne des séquences audiovisuelles filmées en situation de mobilité les principaux fournisseurs du type de service comme YouTube ou DailyMotion utilisent le protocole HTTP pour télécharger une séquence vidéo présente sur son ordinateur personnel vers leurs serveurs. Dans la plupart des cas l'utilisateur aura préalablement utilisé un caméscope pour recueillir la séquence à diffuser, récupéré la séquence sur son ordinateur personnel puis compressé la séquence dans un des formats supportés par le fournisseur du service. Une fois la séquence audiovisuelle téléchargée vers le service de diffusion, l'utilisateur peut communiquer l'URL automatiquement générée aux personnes vers lesquelles il voudra diffuser cette séquence. Pour cela il peut communiquer cette URL à ses amis par l'intermédiaire d'un email ou d'un message sur un service de réseau social comme twitter ou facebook.

Ainsi de nombreuses étapes sont nécessaires à l'utilisateur pour mettre son contenu en ligne. Ceci peut décourager des utilisateurs et limiter l'utilisation du service à des séquences dont l'enregistrement aura été prémédité. De plus la lecture des séquences par le public est différée à cause des étapes de transfert de la caméra vers l'ordinateur personnel, puis de téléchargement. Il n'y a donc pas de diffusion en temps réel.

L'invention dans au moins un mode de réalisation, a pour objectif de pallier au moins un de ces différents inconvénients de l'état de la technique et d'apporter des améliorations. L'invention, définie par la revendication 1, propose un procédé de modélisation d'un affichage issu d'une application sur un serveur, l'affichage étant destiné à un terminal distant; que l'affichage est modélisé pour composer une image en fonction d'une information d'affichage issue de l'application, au moyen de calques superposés, chaque calque étant composé de pixels calques, et étant associé à un premier ensemble de données de modification correspondant, les pixels calques étant groupés en blocs de pixels calques, chaque pixel calque étant caractérisé par un facteur de transparence Ttp dudit pixel; le premier ensemble de données de modification comportant pour chaque calque un vecteur de mouvement dudit calque et des données de transparence dudit calque, l'image résultante étant composée de pixels images et étant associée à un deuxième ensemble de données de modification, les pixels images étant groupés en macroblocs, le deuxième ensemble de données de modification indiquant si les macroblocs de l'image ont été modifiés du fait des modifications des calques par l'application, les pixels images étant composés des pixels superposés correspondants des calques ; le procédé comprenant les étapes suivantes : modification du contenu des pixels calques d'au moins un calque par au moins une primitive selon l'information d'affichage reçue de l'application ; modification du premier ensemble des données de modification pour au moins un calque selon les modifications effectuées par la ou les primitives ; modification du deuxième ensemble de données en fonction du premier ensemble de données ; composition d'une image en fonction des pixels des calques, les données de transparence correspondant à un bloc d'un calque affectant un macrobloc de l'image composée étant utilisées pour déterminer si ledit macrobloc de l'image a été modifié par rapport au macrobloc de l'image précédente; et transmission à un encodeur de l'image à encoder et d'une information d'encodage conformément au deuxième ensemble des données de modifications.

Ce procédé de modélisation permet de décrire simplement les éléments d'une image tels qu'une interface utilisateur et de pouvoir générer un flux vidéo compressé à partir des éléments descriptifs du modèle avec peu de calculs. Ce procédé permet ainsi de minimiser les calculs nécessaires à l'encodage d'un flux vidéo et aussi de simplifier la composition des images.

Le premier ensemble de données de modification peut inclure les vecteurs de mouvement du calque, un facteur de transparence, et/ou pour chaque bloc de pixels du calque si ledit bloc a été modifié par l'application, et/ou s'il est complètement transparent, complètement opaque ou ni l'un ni l'autre. La combinaison des vecteurs de mouvements et des facteurs de transparence de calques superposés permet de calculer des vecteurs de mouvements utilisés pour l'encodage vidéo de l'image composée sans recourir à une recherche de vecteurs de mouvements à partir des images successivement composées.

Le deuxième ensemble de données de modification peut indiquer un vecteur de mouvement pour chaque macrobloc de pixels de l'image pour utilisation dans un encodage différentiel. Les pixels de l'image sont regroupés en macroblocs. Les pixels d'un calque sont regroupés en blocs.

Les données de transparence d'un calque peuvent comprendre un facteur de transparence dudit calque et une indication de transparence pour chaque bloc dudit calque, l'indication de transparence indiquant si ledit bloc est complètement transparent, complètement opaque ou ni l'un ni l'autre. Le premier ensemble de données de modification peuvent comporter en outre des données de modification indiquant pour chaque bloc de pixels dudit calque si ledit bloc a été modifié par l'application.

L'étape de modification du deuxième ensemble de données de modification peut comprendre pour chaque macrobloc de pixels de l'image à encoder, une recherche dans le premier ensemble de données, des blocs de pixels des calques affectant le macrobloc qui ont été modifiés par l'application afin de déterminer si le macrobloc de pixels de l'image à encoder a été modifié.

Dans un mode de réalisation de l'invention si le premier ensemble de données de modification indique qu'un bloc d'un calque affectant un macrobloc de l'image composée a été modifié par l'application, ou si ledit bloc du calque n'est pas totalement transparent et le calque auquel il appartient subit un mouvement, ou si le facteur de transparence dudit calque indique que le calque subit un changement de transparence alors le macrobloc de l'image est recomposé.

Le deuxième ensemble de données de modification peut inclure un vecteur de mouvement pour chaque macrobloc de pixels de l'image pour utilisation dans un encodage différentiel, le vecteur de mouvement étant déterminé en fonction des vecteurs de déplacement des calques dont au moins un bloc a induit une altération dudit macrobloc.

Dans un mode de réalisation de l'invention si plusieurs calques utilisés pour composer l'image ont eu une translation simultanée, le vecteur de déplacement V_{d} pour l'encodage est choisi parmi les vecteurs de déplacement des calques qui ont subi une translation selon un critère prédéterminé.

Le deuxième ensemble de données de modification peut inclure pour chaque macrobloc de pixels si ledit macrobloc a été modifié depuis l'image précédente, et dans lequel seuls les macroblocs modifiés sont ensuite encodés par l'encodeur.

De manière préférée chaque calque Cᵢ peut être caractérisé par un vecteur de déplacement V_{d} à deux dimensions et/ou un scalaire de transparence S_{tc}. définissant une transparence pour l'ensemble dudit calque Cᵢ.

Si plusieurs calques utilisés pour composer l'image ont eu une translation simultanée le vecteur V_{d} pour l'encodage peut être choisi selon un critère prédéterminé.

L'invention propose en outre un procédé d'encodage d'une image, le procédé comprenant réception d'une image et une information d'encodage pour encoder l'image, l'image et l'information d'encodage étant générées par le procédé de modélisation selon le premier aspect de l'invention et l'encodage de l'image à l'aide de l'information d'encodage.

Dans un mode de réalisation chaque macrobloc est régulièrement encodé en mode intra pour transmission vers le terminal pour palier la perte de paquets liée au lien sans fil.

L'invention, définie par la revendication 11, propose en outre un dispositif de modélisation d'un affichage issu d'une application sur un serveur, l'affichage étant destiné à un terminal distant; tel que : l'affichage est modélisé pour composer une image en fonction d'une information d'affichage issue de l'application, au moyen de calques superposés,
chaque calque étant composé de pixels calques et étant associé à un premier ensemble de données de modification correspondant, les pixels calques étant groupés en blocs de pixels calques, chaque pixel calque étant caractérisé par un facteur de transparence Ttp dudit pixel ; le premier ensemble de données de modification comportant, pour chaque calque, un vecteur de mouvement dudit calque et des données de transparence dudit calque, l'image résultante étant composée de pixels images et étant associée à un deuxième ensemble de données de modification, le deuxième ensemble de données de modification indiquant si les macroblocs de l'image ont été modifiés du fait des modifications des calques par l'application, les pixels images étant composés des pixels superposés correspondants des calques ; le dispositif comprenant : des moyens pour modifier le contenu d'au moins un calque par au moins une primitive selon l'information d'affichage reçue de l'application ; des moyens pour modifier le premier ensemble des données de modification pour au moins un calque selon les modifications effectuées par la ou les primitives ; des moyens pour modifier le deuxième ensemble de données en fonction du premier ensemble de données ;
des moyens pour composer une image en fonction du contenu des calques, les données de transparence correspondent à un bloc d'un calque affectant un macrobloc de l'image composée étant utilisées pour déterminer si ledit macrobloc de l'image a été modifié par rapport au macrobloc de l'image précédente ; et
des moyens pour transmettre à un encodeur l'image à encoder et une information d'encodage conformément au deuxième ensemble des données de modifications.

L'invention, définie par la revendication 13, propose en outre un encodeur agencé pour recevoir une image générée par le procédé selon un mode de réalisation du premier aspect de l'invention et une information d'encodage générée par le procédé selon un mode de réalisation du premier aspect de l'invention, l'encodeur étant agencé de manière à encoder l'image à l'aide de l'information d'encodage. L'encodeur peut être agencé pour encoder chaque macrobloc de l'image régulièrement en mode intra pour transmission vers le terminal.

Selon l'invention, l'affichage est modélisé en fonction d'une information d'affichage issue de l'application, au moyen de calques superposés ; chaque calque composé de pixels calques et être associé à un premier ensemble de données de modification correspondant ; les pixels calques étant groupés en blocs de pixels calques, chaque pixel étant caractérisé par un facteur de transparence Ttp dudit pixel; le premier ensemble de données de modification comportant pour chaque calque un vecteur du: mouvement dudit calque et des données de transparence dudit calque ; l'image résultante étant composée de pixels images et étant associée à un deuxième ensemble de données de modification ; les pixels images étant groupés en macroblocs ; le deuxième ensemble de données de modification indiquant si des macroblocs de l'image ont été modifiés du fait des modifications des calques par l'application, les pixels images étant composés des pixels superposés correspondants des calques ; le procédé comprenant les étapes suivantes :
modification du contenu des pixels calques d'au moins un calque par au moins une primitive selon l'information d'affichage reçue de l'application ;
modification du premier ensemble des données de modification pour au moins un calque selon les modifications effectuées par la ou : les primitives ;
modification du deuxième ensemble de données en fonction du premier ensemble de données;
   composition d'une image en fonction des pixels des calques les données de transparence correspondant à un bloc de calque affectant un macrobloc de l'image composée étant utilisées pour déterminer si ledit macrobloc de l'image a été modifié par rapport au macrobloc de l'image précédents ; et
transmission à un encodeur de l'image à encoder et d'une information d'encodage conformément au deuxième ensemble des données de modifications.

Les données de transparence d'un calque peuvent comprendre un facteur de transparence dudit calque et une indication de transparence pour chaque bloc dudit calque, l'indication de transparence indiquant si ledit bloc est complètement transparent, complètement opaque ou ni l'un ni l'autre.

Le premier ensemble de données de modification peut comporter en outre des données de modification indiquant pour chaque bloc de pixels dudit calque si ledit bloc a été modifié par l'application.

L'étape de modification du deuxième ensemble de données de modification peut comprendre pour chaque macrobloc de pixels de l'image à encoder, une recherche dans le premier ensemble de données des blocs de pixels des calques affectant le macrobloc qui ont été modifiés par l'application afin de déterminer si le macrobloc a subi des modifications.

Si le premier ensemble de données de modification indique qu'un bloc d'un calque affectant un macrobloc de l'image composée a été modifié par l'application, ou si ledit bloc du calque n'est pas totalement transparent et le calque auquel il appartient subit un mouvement, ou si le facteur de transparence dudit calque indique que le calque subit un changement de transparence, le macrobloc de l'image peut être recomposé.

Le deuxième ensemble de données de modification peut inclure un vecteur de mouvement pour chaque macrobloc de pixels de l'image pour utilisation dans un encodage différentiel, le vecteur de mouvement étant déterminé en fonction d'un vecteur de déplacement des calques dont au moins un bloc ont induit une altération dudit macrobloc. La présente invention, définie par la revendication 12, propose un programme informatique pour la mise en oeuvre du procédé correspondant décrit ci-avant. Un tel programme peut être téléchargeable via un réseau de télécommunication et/ou stocké dans une mémoire d'un dispositif de traitement et/ou stocké sur un support mémoire destiné à coopérer avec un dispositif de traitement.

### Description des figures

D'autres caractéristiques et avantages de l'invention apparaîtront à l'examen de la description détaillée ci-après, et des dessins annexés sur lesquels :
- la figure 1 illustre schématiquement un système de télécommunication selon au moins un mode de réalisation de l'invention ;
- la figure 2A représente schématiquement un serveur et un terminal selon un premier mode de réalisation de l'invention ;
- la figure 2B illustre les étapes d'un procédé d'échange de données entre un terminal et un serveur selon le premier mode de réalisation de l'invention ;
- la figure 3A représente schématiquement un serveur et un terminal selon un deuxième mode de réalisation de l'invention ;
- la figure 3B illustre le terminal et le serveur de la figure 3A ;
- la figure 3C illustre un pointeur selon le deuxième mode de réalisation de l'invention ;
- la figure 4 représente schématiquement un serveur et un terminal selon un troisième mode de réalisation de l'invention ;
- la figure 5 représente schématiquement des modules du serveur de la figure 4 ;
- la figure 6A représente schématiquement des calques de modélisation selon le troisième mode de réalisation de l'invention ;
- la figure 6B représente schématiquement les macroblocs d'une image selon le troisième mode de réalisation de l'invention ;
- les figures 7A à 7C illustrent les étapes d'un procédé de modélisation d'un affichage selon le troisième mode de réalisation de l'invention ;
- les figure 8A à 8C représentent schématiquement un serveur et un terminal selon un quatrième mode de réalisation de l'invention ;
- les figures 9A et 9B représentent schématiquement un serveur et un terminal selon un cinquième mode de réalisation de l'invention ; et
- la figure 10 représente schématiquement un encodeur conventionnel.

Les modules représentés sur les différentes figures sont des unités fonctionnelles, qui peuvent ou non correspondre à des unités physiquement distinguables. Par exemple, ces modules ou certains d'entre eux peuvent être regroupés dans un unique composant, ou constituer des fonctionnalités d'un même logiciel. A contrario, certains modules peuvent éventuellement être composés d'entités physiques séparées.

### Description Détaillée

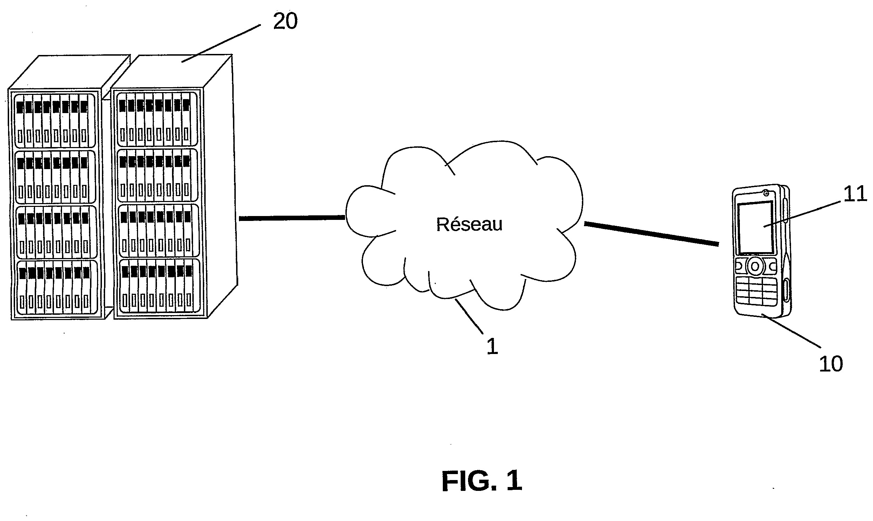

La figure 1 illustre schématiquement un système de télécommunication dans lequel un terminal utilisateur 10 en situation de mobilité a accès par l'intermédiaire d'un réseau 1 de type GSM 3G (abrégé en anglais de Global System of Mobile Communications Third Generation) à un serveur d'application distant 20 sur lequel s'exécute au moins une application. Bien entendu l'invention n'est pas limitée à un tel réseau. Ainsi par exemple le réseau peut être n'importe quel type de réseau de télécommunication permettant d'établir un lien audiovisuel. Le terminal mobile 10 peut être un téléphone portable, un PDA, un ordinateur portable etc.

L'application sur le serveur 20 permet à l'utilisateur d'accéder à des informations temps réel (comme la météo, des cours de bourse...), personnelles (comme le solde d'un compte en banque, un album de photographies personnelles...) et multimédia (comme par exemple des vidéos). Une interface utilisateur produite par l'application s'affiche sous forme des éléments graphiques (titres, textes, images..) sur l'écran 11 du terminal 10 et permet à l'utilisateur d'interagir avec l'application. Le terminal 10 est équipé d'un décodeur pour décoder le flux vidéo envoyé par l'application du serveur 20 pour afficher l'interface utilisateur sur l'écran 11 du terminal 10. Le terminal 10 peut être équipé d'un encodeur vidéo pour transmettre des données vidéo au serveur.

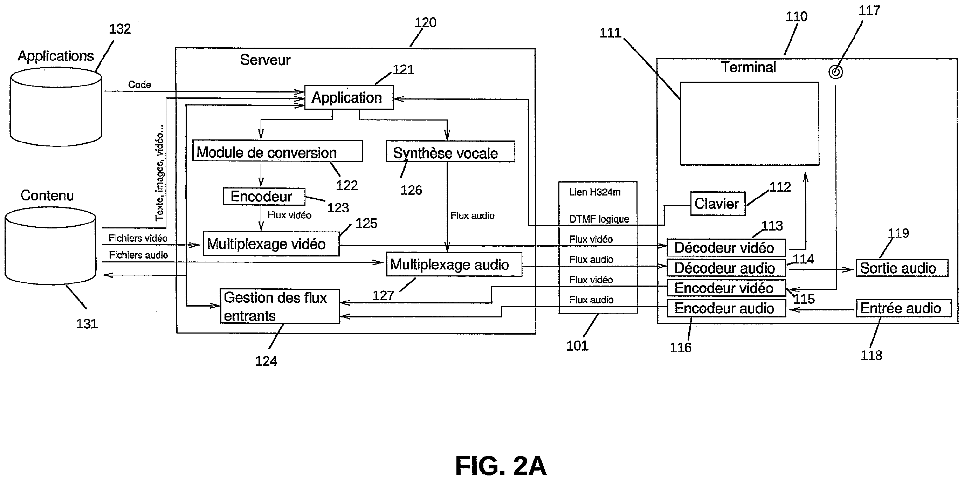

On se réfère maintenant à la figure 2A sur laquelle est illustré un premier mode de réalisation de l'invention. Dans cet exemple un lien multimédia bidirectionnel 101 fourni par une communication audiovisuelle disponible sur le réseau 3G à l'aide du protocole h324m est utilisé par un terminal 110 pour interagir avec l'application qui s'exécute sur le serveur 120 distant au terminal 110.

Dans cet exemple le terminal 110 s'agit d'un téléphone portable de type visiophone 3G. Le terminal 110 comporte un écran 111, sur lequel sera affiché une interface utilisateur fournie par le serveur 120, des touches du clavier 112, un décodeur vidéo 113 pour décoder des données vidéos reçu du serveur 120, un décodeur audio 114 pour décoder des données audio reçu du serveur 120, un encodeur vidéo 115 pour encoder des données vidéo, et un encodeur audio 116 pour encoder des données audio, une caméra 117 pour saisir des séquences d'images, des moyens 118 pour générer un flux audio, par exemple un microphone ou une oreillette Bluetooth et des moyens 119 par exemple un haut parleur pour reproduire des données audio.

Les touches de clavier 112 sont aptes à générer des signaux DTMF logiques à l'intérieur d'une session H324m.

Le serveur 120 est équipé d'un module d'application 121 où s'exécute l'application, un module de conversion 122 comportant un logiciel permettant à un processeur de générer un flux audio et/ou vidéo, en temps réel, à partir des données générées par l'application et un encodeur 123 pour encoder le flux audio et/ou vidéo généré par le module de conversion 122. L'encodeur 123 peut être un encodeur vidéo de type H.264 comme illustré à la figure 10 par exemple ou d'autre type d'encodeur présenté dans Iain E.G. Richardson - H.264 and MPEG-4 vidéo compression. John Wiley & Sons Ltd., 2003 ISBN 0-470-84837.5. Dans un mode de réalisation le serveur 120 peut être équipé d'un module de modélisation et un encodeur comme seront décrits pour le troisième mode de réalisation de l'invention.

Le module d'application 121, le module de conversion 122 et/ou l'encodeur 123 sont par exemple réalisés par des programmes exécutés par un ou plusieurs processeurs. Bien entendu les modules du serveur peuvent être des modules distincts comme illustrés à la figure 2A ou peuvent faire partie d'un ou plusieurs modules intégrés.

Le serveur 120 comporte en outre des moyens de gestion des flux entrants 124 pour recevoir et traiter des données audio transmises par le terminal 110 et pour recevoir et traiter des données vidéo transmises par le terminal 110. Les moyens 124 pour recevoir et traiter des données audio reçues du terminal 110 peuvent comporter un dispositif de reconnaissance vocale par exemple et/ou un dispositif d'enregistrement audio. Les moyens 124 pour traiter des données vidéo reçues du terminal 110 peuvent comprendre un dispositif de réalité augmentée. Par dispositif de réalité augmentée on entend un dispositif qui rend possible la superposition d'un modèle virtuel 3D ou 2D à la perception que nous avons naturellement de la réalité et ceci en temps réel. Ce dispositif peut aussi bien s'appliquer à la perception visuelle (superposition d'image virtuelle aux images réelles) qu'aux perceptions proprioceptives comme les perceptions tactiles ou auditives. Les moyens 124 pour traiter des données vidéo reçues du terminal 110 peuvent comprendre également ou comme variante, un dispositif de reconnaissance de formes et/ou un dispositif d'enregistrement vidéo.

Le serveur 120 a accès à une base de données d'applications 132 et une base de données de contenu 131. Le module d'application 121 peut récupérer des fichiers vidéo et audio dans la base de données de contenu en fonction des données d'applications pour les transmettre au terminal 110.

Le serveur est également équipé d'un module de synthèse vocale 126 pour générer des données audio à transmettre au terminal en fonction des données reçu du module de l'application 121.

Le serveur 120 est équipé d'un module de multiplexage vidéo 125 pour gérer les données vidéo reçues de la base de données contenu 131 ou de l'encodeur 123 ; et un module de multiplexage audio pour gérer les données audio reçues du module de synthèse vocale 126 ou de la base de données contenu 131.

Comme illustré à la figure 2A l'utilisateur du terminal 110 peut interagir avec l'application sur le module d'application 121 du serveur distant par l'intermédiaire des signaux DTMF générés par les touches du clavier 112 du téléphone ; du flux audio de la voie remontante de l'entrée audio 118; et/ou du flux vidéo de la voie remontante de la caméra 117.

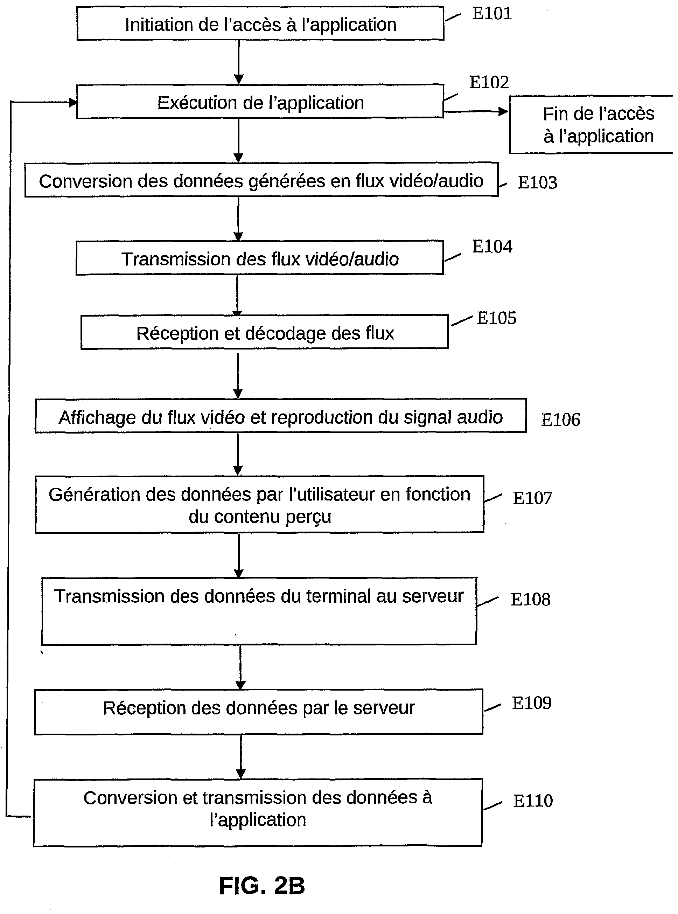

La figure 2B présente un organigramme d'un exemple d'un procédé d'échange de données entre le terminal 110 et le serveur 120. Dans une étape E101 l'utilisateur du terminal 110 passe un appel audio ou vidéo pour initier l'accès a l'application sur le module d'application 121 du serveur 120 pour consulter des informations, comme par exemple la météo.

Dans une étape E102 l'application génère des données pour un premier affichage sur l'écran 111 du terminal 110 en réponse à l'appel du terminal 110. Dans le cas d'une consultation du météo par exemple l'affichage généré par l'application pourrait être, une carte de la France pour permettre à l'utilisateur de choisir une région d'intérêt. Les données générées par le module d'application 121 sont ensuite transmises du module de l'application 121 au module de conversion 122 pour les convertir en flux vidéo dans une étape E103. Alternativement l'application peut récupérer les données audiovisuelles de la base de données contenu 131, ou peut générer des données audio à partir du module de synthèse vocale en réponse à l'appel du terminal 110.

Dans une étape E104 le flux vidéo est encodé par l'encodeur 123 et le flux encodé est envoyé au terminal 110 par le lien audiovisuel. Les données stockées dans la base de données 131 peuvent être déjà en format encodées.

Le terminal 110 reçoit le flux vidéo encodé dans une étape E105 et le décode à l'aide du décodeur 112. Dans une étape E106 une image de la carte de France est affichée sur l'écran 111.

Dans une étape E107 l'utilisateur du terminal 110 utilise les touches de clavier 113 pour sélectionner une région de la carte affichée sur l'écran 111 et génère ainsi des données en fonction du contenu de l'affichage. Les signaux DTMF générés par les touches de clavier 112 sont ensuite transmis par le lien audiovisuel au serveur 120 dans une étape E108. Les signaux sont reçus par le serveur 120 et traités par un module de traitement DTMF 126 du serveur 120 dans une étape E109. Les données correspondent aux signaux DTMF sont ensuite transmises au module de l'application 121 dans une étape E110 dans un format utilisable par l'application. L'application traite les données et le procédé peut continuer avec l'échange de données par l'intermédiaire du lien audiovisuel entre le terminal 110 et le serveur 120.

L'utilisateur peut également fournir des données d'interface sous forme audio (par sa voix par exemple) ou sous forme vidéo (par transmission d'une image ou une séquence d'images enregistrée par exemple).

Les avantages de cette solution sont multiples :
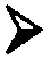 L'interopérabilité est garantie par l'application initiale du protocole H324m : la communication audio-visuelle entre le serveur 120 et le terminal 110. Ceci impose un respect scrupuleux du protocole H324m ainsi que des standards de compression audio et vidéo.
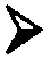 Le rendu sur l'écran 111 du terminal 110 est garanti par le fait qu'une image vidéo est transmise "au pixel près", et que la taille de l'image est négociée à l'initialisation de la session H324m.
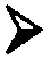 La vitesse d'exécution de l'application n'est pas limitée par la puissance de calcul et la mémoire disponible sur le terminal 110. L'application peut consommer une grande quantité de ressources du serveur 120 sans compromettre l'autonomie du terminal 10. Les ressources consommées incluent la bande passante pouvant être utilisée pour communiquer avec d'autres services.
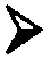 L'accès à l'application sur le serveur 120 est simple et rapide. Il suffit de passer un appel vidéo. Aucun logiciel supplémentaire ne doit être téléchargé ni installé.
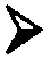 La diffusion de séquences audiovisuelles est simple et instantanée

Un deuxième mode de réalisation de l'invention propose de donner à un utilisateur d'un terminal en situation de mobilité ayant accès a une application sur un serveur distant la possibilité d'interagir plus finement avec l'application tournant sur le serveur.

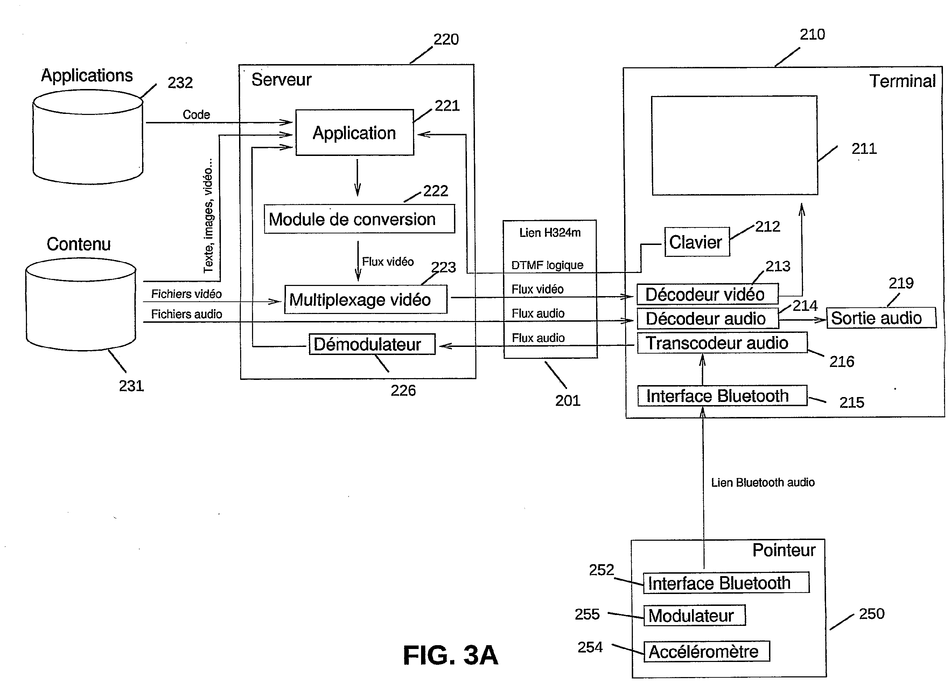

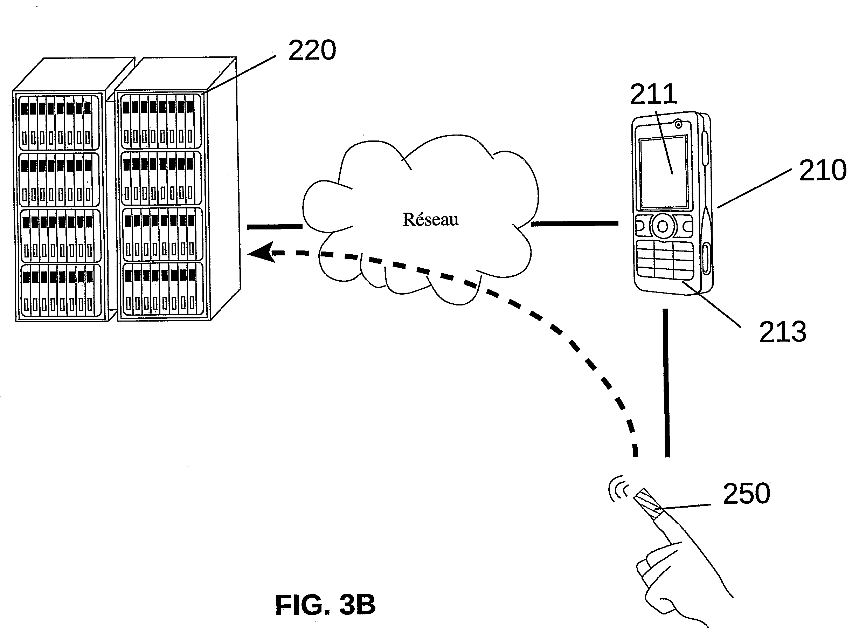

Dans cet exemple illustré par les figures 3A à 3C, le terminal 210 comporte un écran 211, sur lequel sera affiché, comme dans l'exemple précédent, une interface utilisateur pour interagir avec une application sur un serveur distant 220, des décodeurs audio 213 et vidéo 214 pour décoder des données vidéos et/ou audio reçues du serveur 220, des touches du clavier 212, un haut parleur 219 pour reproduire des données audio et une interface Bluetooth 215 pour communiquer avec un dispositif de positionnement ou pointeur 250 équipé d'une radio Bluetooth pour navigation de l'application. Comme dans l'exemple précédent les touches de clavier 212 peuvent être aptes à générer des signaux DTMF logiques à l'intérieur d'une session H324m. Le terminal 210 peut être équipé des moyens pour générer un flux audio et des moyens pour générer un flux vidéo comme dans le terminal de l'exemple précédent. Le terminal comporte en outre un transcodeur audio 216 pour transcoder des données audio destinées au serveur.

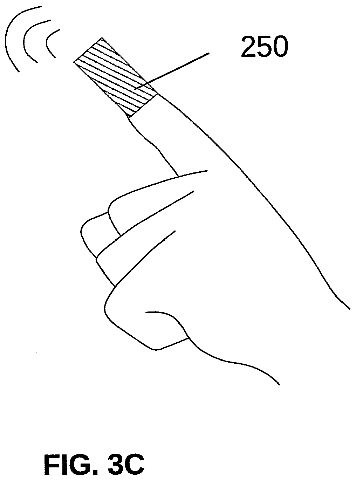

Ce deuxième mode de réalisation se différencie du premier en ce que le terminal 210 est équipé d'un pointeur de navigation 250 pour fournir des données de mouvement de l'utilisateur. Le pointeur 250 est équipé d'un processeur, d'une radio Bluetooth 252, d'un accumulateur électrique, d'un module de positionnement 254 et d'un modulateur 255. Le module de positionnement 254 peut être de type souris, ou de type accéléromètre, par exemple. Le pointeur 250 est intégré à un dispositif se positionnant dans la main ou sur l'index de l'utilisateur comme illustre à la figure 3C.

Le serveur 220 est équipé d'un module d'application 221, un module de conversion 222 comportant un logiciel permettant à un processeur de générer un flux audio et/ou vidéo, en temps réel à partir des données générées par l'application; un encodeur 223 pour encoder le flux vidéo et/ou audio généré par le module de conversion 222 pour transmission vers le terminal 210 ; et un démodulateur 226 pour démoduler des données reçues par un canal audio. Comme dans le mode de réalisation précédent le serveur a accès à une base de données d'applications 232 et une base de données du contenu 231 pour récupérer les fichiers audio et/ ou vidéo pour transmettre au terminal 210.

Les téléphones 3G équipés en Bluetooth supportent le profile "Headset profile" défini dans le standard Bluetooth. En utilisation normale, lors d'un appel vidéo, une oreillette Bluetooth est utilisée pour délocaliser la fonctionnalité audio du terminal vers la tête de l'utilisateur. Dans ce deuxième mode de réalisation le pointeur 250 est vu, par le téléphone 210, comme une oreillette Bluetooth. Les données du mouvement de l'index de l'utilisateur et donc du pointeur 250 sont modulées dans le canal audio montant transmis par le pointeur 250 vers le serveur 220. Une modulation robuste au transcodage CSV (Bluetooth) vers AMR (H324m) audio peut être effectuée par le transcodeur audio 214 pour la transmission de ces données.

Dans le serveur 220, les données audio reçues via le canal audio sont démodulées par le module de démodulation 226 afin de récupérer les données de mouvement du pointeur 250 et de les transmettre à l'application en cours, dans le module de l'application 221, sous forme d'événements. Une détection de porteuse ou de séquence prédéfinie pourra permettre au serveur 220 de détecter la présence du pointeur 250.

En mode d'utilisation des informations d'affichage sont générées par le module l'application 221 et sont converties en format audio-visuel pour transmission par le module de conversion 222. Les données audiovisuelles sont encodées par l'encodeur 223 et envoyées au terminal 210. Alternativement les données audiovisuelles encodées peuvent être récupérées de la base de données contenu 231. Les données audiovisuelles sont ensuite décodées par le décodeur 213 et ou 214 et une interface d'utilisation est affichée sur l'écran 211. L'utilisateur déplace son index sur lequel est monté le pointeur 250 en réponse au contenu de l'affichage pour naviguer l'application sur le serveur 220 et ainsi donner des instructions a l'application. Les données de mouvement en fonction du déplacement du pointeur 250 sont modulées par le modulateur 255 puis transcodées du format CSV (Bluetooth) vers AMR (H324m) audio par le transcodeur audio 216, et sont ensuite transmises au serveur 210 par l'intermédiaire d'un canal audio. Le démodulateur 226 démodule ces données de mouvement. Les données de mouvement sont ensuite traitées par le module d'application 221 pour récupérer les instructions de navigation de l'utilisateur.

Ainsi le mouvement de l'index de l'utilisateur peut être utilisé pour récupérer les intentions ou les instructions de l'utilisateur vis-à-vis de l'application.

Par exemple, dans le cas où on visualise une image plus grande que l'écran du terminal, les mouvements de l'index peuvent indiquer le mouvement de translation désiré de l'image visualisée. Un autre exemple consiste à reproduire sur l'écran un pointeur, et à interpréter des mouvements de l'index pour déplacer ce pointeur sur l'écran. Un mouvement spécifique du pointeur 250 peut être utilisé pour déplacer d'une partie d'une image à une autre partie, d'une image à une autre, d'une liste à une autre liste, d'un écran à un autre écran, de répondre oui ou non etc.

Ainsi l'utilisateur peut parcourir l'interface utilisateur pour interagir plus finement avec l'application. Le pointeur 250 permet donc une navigation plus intuitive de l'application dans l'interface utilisateur lorsque la voie audio remontante du terminal 210 au serveur 220 n'est pas utilisée. De plus l'utilisateur peut garder le terminal fixe afin de consulter les informations présentes sur l'écran du terminal.

Avantageusement on peut équiper l'index de l'utilisateur d'un bouton actionnable avec le pouce, et pouvant faire office de "clic" (cas de la souris). L'information de pression sur ce bouton pour être adjointe aux données d'accélération avant modulation.

Un avantage de ce mode de réalisation est qu'il ne nécessite le téléchargement d'aucun logiciel ou driver spécialement conçu sur le téléphone mobile pour être utilisé puisque il peut utiliser un profile existant du standard Bluetooth. Ainsi, il est possible d'utiliser un terminal existant sans avoir à modifier ni le hardware ni le firmware de celui-ci.

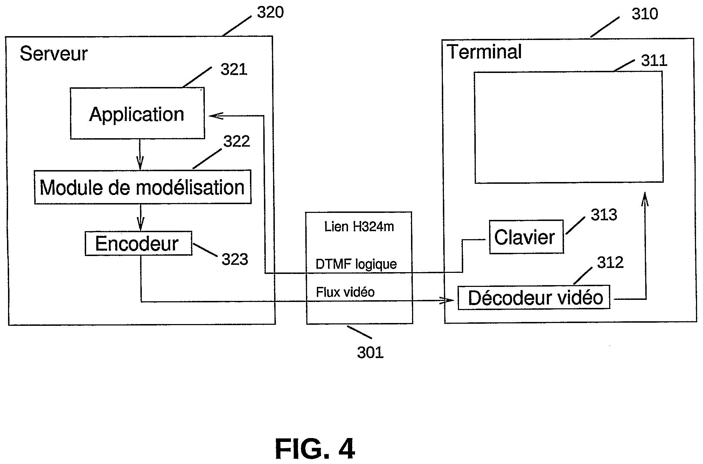

Comme représenté sur la figure 4 dans un troisième mode de réalisation de l'invention, le serveur 320 comporte un module d'application 321, un module de modélisation 322 et un encodeur 323. Le module de modélisation 321 présente un modèle pour permettre à la fois de décrire simplement les éléments d'une interface utilisateur à afficher sur le terminal 310, et de pouvoir générer par l'encodeur 323 un flux vidéo compressé à partir des éléments descriptifs du modèle avec peu de calculs. Ce modèle permet aussi de simplifier la composition des images.

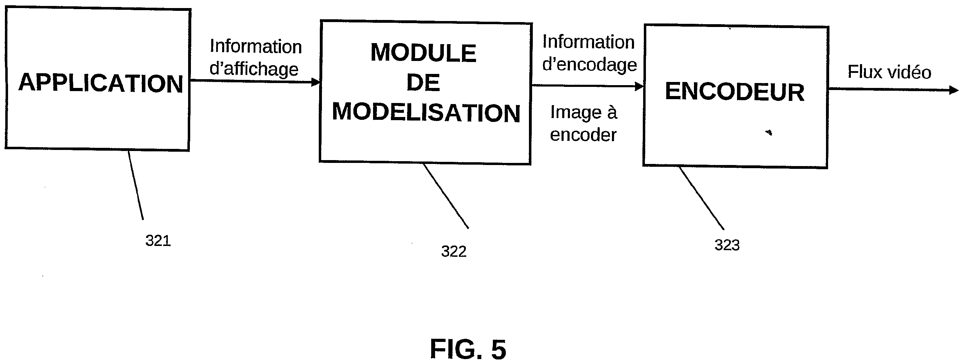

Comme illustré a la figure 5 le module de modélisation 322 constitue une interface entre le module d'application 321 définissant ce qui doit être affiché à l'écran 311, et l'encodeur 323 qui utilise les informations générées par le module de modélisation 322 pour générer le flux vidéo à envoyer au terminal 310. A cet effet le module de modélisation 322 reçoit des informations d'affichage du module d'application 321 et traite les informations d'affichage de manière à fournir une information d'encodage et l'image à encoder à l'encodeur. L'encodeur 323 peut ainsi encoder l'image à encoder utilisant l'information d'encodage. Le module de modélisation 322 est conçu de manière à utiliser un modèle qui permet à la foi de décrire simplement des écrans complexes, et à l'encodeur 323 d'utiliser efficacement les informations du modèle lors de l'encodage.

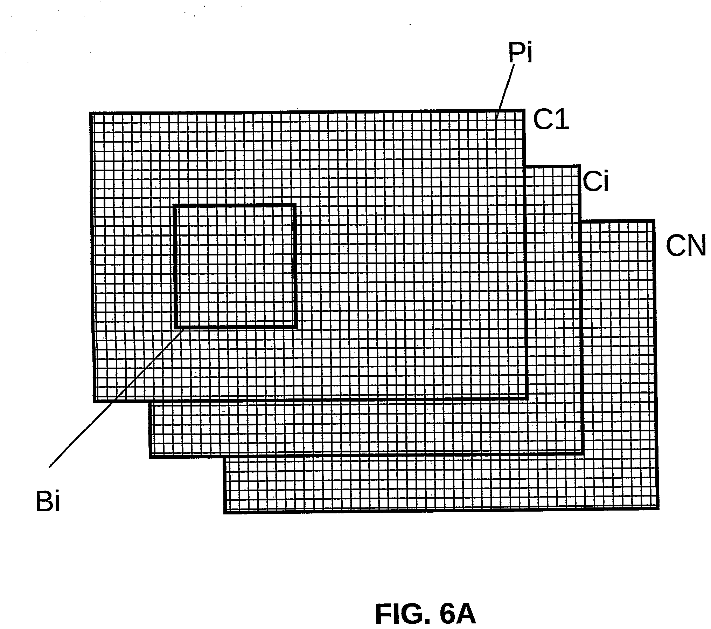

Le troisième mode de réalisation de l'invention propose de modéliser l'affichage par des calques superposés (C₁...Cᵢ...C_{N}) comme illustre à la figure 6A. Chaque calque Cᵢ est constitué d'un ensemble de M pixels (P₁..Pᵢ....P_{M}). Chaque pixel Pᵢ est caractérisé par un vecteur de couleur V_{C} à quatre dimensions (R, G, B, A) définissant la couleur du Pixel Pᵢ ainsi qu'un facteur de transparence Fₜₚ définissant la transparence dudit Pixel Pᵢ. N calques Cᵢ sont empilés l'un sur l'autre.

Ce modèle 3221 en forme de calques (C₁...Cᵢ...C_{N}) empilés permet de définir commodément les effets utiles à la présentation d'informations issues de l'application sur le serveur 320 à un utilisateur du terminal 310. Par exemple, on peut dessiner sur le calque C_{N} le plus bas, une image de fond, et dessiner du texte sur le calque supérieur C₁. Ainsi, il est possible de modifier le texte sur le calque C₁ et conserver le fond défini sur le calque C_{N} sans que l'application ait besoin de dessiner les pixels de l'image de fond sur le calque C_{N} à chaque modification du texte du calque C₁.

Au titre d'exemple pour qu'une icône apparaisse progressivement à l'écran 311 du terminal 310, on peut dessiner l'icône sur un calque Ci au-dessus d'un fond du calque C_{N} par exemple, et faire varier les transparences Fₜₚ des pixels (P₁..Pᵢ....P_{M}). concernés..

Lorsqu'on veut faire une transition entre deux images d'affichage sur l'écran 311 du terminal 310 par exemple, on peut placer les deux images sur deux calques Cᵢ et Cᵢ₊₁, par exemple, et faire varier les transparences Fₜₚ des pixels (P₁..Pᵢ....P_{M}). des calques concernés pour donner un effet de fondu enchaîné.

En outre, chaque calque Cᵢ possède un vecteur de déplacement V_{d} à deux dimensions, un scalaire S_{tc} définissant une transparence pour l'ensemble du calque ainsi qu'une table appelée « table des bloc modifiés » ou en anglais « layer altered block » déterminant, pour un bloc Bᵢ de pixels (P₁..Pᵢ....P_{M}). de calque Cᵢ, si le bloc Bᵢ a été modifié par l'application, s'il est totalement opaque, totalement transparent ou ni l'un ni l'autre. Un bloc Bᵢ peut être constitué par exemple, de 8x8 pixels.

La table 1 est un exemple d'une représentation d'une telle table

**Table 1**

| **Bloc #** | **Modification ?** | **Transparence** |
|---|---|---|
| 1 | O | O |
| 2 | N | X |
| I | N | T |
| N | O | X |

Dans la table la première colonne identifie les blocs, la deuxième indique si le bloc a été modifie oui (O) ou (N) et la troisième colonne indique si le bloc est opaque (O), transparent (T) ou ni l'un ni l'autre (X).

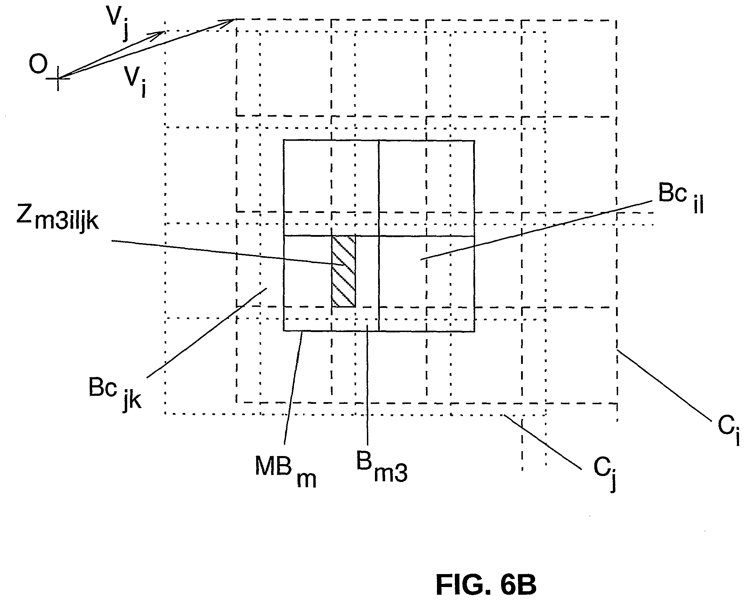

Un mémoire tampon de trame 3222 représente l'image à encoder. L'image à encoder est composé des pixels groupés en groupes de pixels appelés macroblocs. Un macrobloc (ou macroblock en anglais) peut correspondre à un groupe de 16*16 pixels par exemple. Dans les variantes un macrobloc peut correspondre à 16*8, 8*16 ou 8*8 par exemple. On y adjoint une table appelée table des modifications des macroblocs, décrivant, pour un macrobloc MBₘ de l'image composée par le modèle 3221 si le macrobloc MBₘ a été modifié par rapport à l'image précédente. Un macrobloc MBₘ est composé d'un nombre de blocs Bₘₖ comme illustré à la figure 6B. Le nombre de blocs qui constituent un macrobloc dépend du standard d'encodage vidéo utilisé.

La table 2 est un exemple d'une telle table

**Table 2**

| **Macrobloc #** | **Modification depuis l'image précédente** | **Vecteur de mouvement** |
|---|---|---|
| 1 | O | V₁ |
| 2 | N | V₂ |
| *i* | O | Vᵢ |
| N | O | Vₙ |

Dans la table la première colonne identifie les macroblocs, la deuxième indique si le macrobloc a été modifie oui (O) ou (N) depuis l'image précédente et la troisième colonne indique les calques modifies par mouvement.

Dans l'image un pixel image est constitué d'un mélange des pixels superposés des calques par un procédé de mélange des pixels avec alpha ou « pixel alpha blending » en anglais.

Un exemple de la composition d'un macrobloc est illustré à la Figure 6B. MBₘ représente le macrobloc m du tampon mémoire de trame. Pour simplifier, seuls les blocs Y de luminosité sont représentés. MBₘ est donc constitué de quatre blocs. Bₘ₃ est le troisième bloc du macrobloc MBₘ du tampon mémoire de trame.

Dans cet exemple, Cᵢ représente le calque i, Cⱼ représente le calque j, Vᵢ représente le vecteur de translation du calque i par rapport à O, Vⱼ représente le vecteur de translation du calque j par rapport à O, O représente une origine fixe par rapport à tampon mémoire de trame, Bcᵢₗ représente le bloc l du calque i, et Bcⱼₖ représente le bloc k du calque j.

Zₘ₃ᵢₗⱼₖ représente la zone du bloc Bₘ₃ du macrobloc MBₘ affecté par les blocs i du calque 1 et j du calque k. On suppose dans cet exemple que le calque i est au dessus du calque j, c'est-à-dire qu'une zone opaque du calque i peut occulter un zone du calque j.

Si, par exemple, le bloc Bcᵢₗ est marqué comme opaque et modifié alors le macrobloc MBₘ sera marqué comme modifié. Si, en revanche, le bloc Bcᵢₗ est marqué comme transparent, en mouvement, et le bloc Bcⱼₖ est marqué comme ni opaque ni transparent, non modifié, alors le macrobloc MBₘ ne sera pas marqué comme modifié.

Pour toutes les zones Zₘ₃ₓₓₓₓ qui affectent le block Bₘ₃ de l'image, les indications des tables de modification des blocs de calques ainsi que les descriptions de mouvement et de transparence des calques permettent d'évaluer sa contribution à la modification de la mémoire tampon de trame. Le vecteur de mouvement du macrobloc MBₘ sera choisi parmi les vecteurs de mouvement des calques.

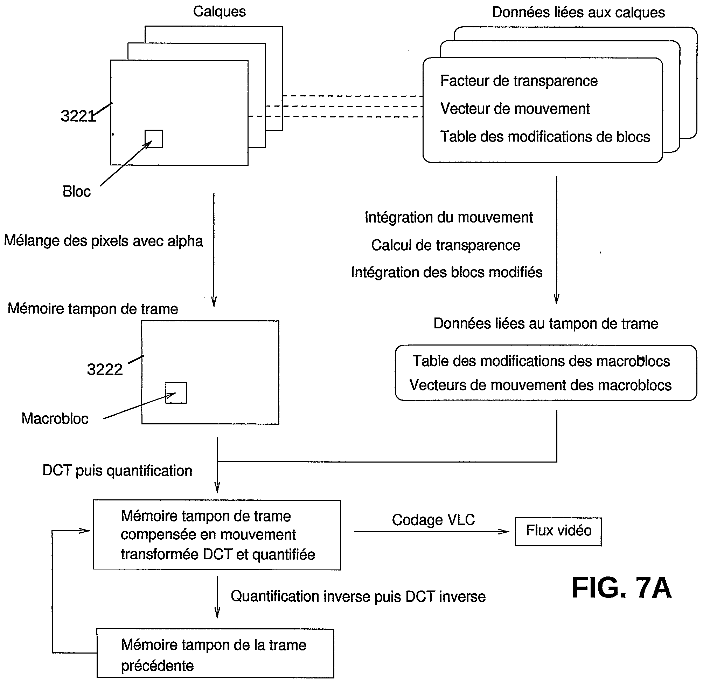

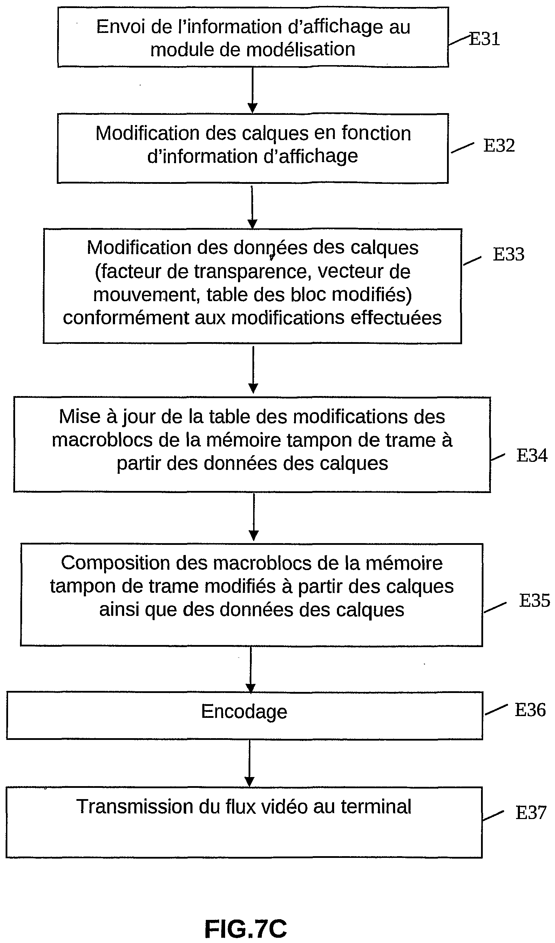

Un exemple du procède de modélisation selon un mode de réalisation de l'invention sera décrit en référant aux figures 7a à 7c. Dans une première étape E31 du procédé le module de l'application 321 envoi une information d'affichage au module de modélisation 322. L'information d'affichage peut être en forme des primitives.

Dans une étape E32 le module de modélisation 322 peut modifier le contenu des calques Ci en fonction d'information d'affichage reçu à l'aide de primitives. Les primitives permettant par exemple de copier une image à un ou plusieurs calques à partir d'un fichier au format png ou jpeg, d'y dessiner un rectangle, ou d'y ajouter du texte à partir d'une police de caractères.

Au titre d'exemple une primitive « select layer » permet de sélectionner un calque courant Cᵢ que les primitives appelées ultérieurement vont affecter. Alternativement, on peut ajouter à chaque primitive le calque Cᵢ auquel elle s'applique.

Par exemple, la primitive « rectangle » utilisera les paramètres suivants :
- x, y : position du coin supérieur gauche
- w, h : largeur et hauteur du rectangle
- c : couleur de remplissage du rectangle
Cette primitive dessinera sur le calque courant Cᵢ, à la position défini par les coordonnées (x, y), un rectangle de largeur w et de hauteur h. L'intérieur de ce rectangle sera rempli par la couleur c.

Dans une étape E33 des données des calques (facteur de transparence, vecteur de mouvement, et la table des blocs modifiés sont modifiés conformément à la réalisation de la primitive ou des primitives invoquée par l'application. A cet effet des primitives modifient le calque Ci auquel elles s'appliquent, et modifient la table des blocs modifiés conformément aux modifications effectuées par les primitives. Par exemple, la primitive « rectangle » invoquée avec les paramètres opérationnel x=0, y=0, w=8, h=8, c=noir, modifie le calque courant Ci, et indique dans la table des blocs modifiés que le premier bloc B1 du calque Ci a été modifié.

De plus, on peut, à tout instant et pour chaque calque, définir un mouvement de translation par le vecteur de déplacement V_{d}, ainsi qu'une variation du facteur de transparence par moyen du scalaire de transparence S_{tC}.

Par exemple, on peut définir une primitive « déplacer à » ou en anglais « move to » à laquelle les paramètres suivants sont transmis :
- x, y : coordonnées de la position finale du calque
- t : temps de la translation

Cette primitive déplace le calque Ci courant de sa position courante à la position définie par les coordonnées (x, y) en un temps t défini en millisecondes par exemple.

Pour chaque image à encoder, pour chaque macrobloc MBₘ du mémoire tampon de trame représentant l'image, dans une étape E34 on explore les blocs Bi des calques Ci qui ont une intersection non vide avec ce macrobloc MBₘ. Les calques étant empilés, chaque macrobloc MBₘ du buffer de trame est constitué à partir de, potentiellement, au moins une partie des pixels de plusieurs blocs Bₘₖ de chaque calque Ci comme illustre à la figure 6B. Pour détecter si un macrobloc MBₘi a subi des modifications, ainsi que la nature de ces modifications, on doit donc analyser les blocs Bi des calques Ci qui affectent ce macrobloc MBₘ.

Si les blocs Bi correspondants sont marqués dans la table des modifications des macroblocs comme ayant été modifiés par l'application, ou s'ils ne sont pas totalement transparents et que le calque Ci auquel ils appartiennent est animé d'un mouvement, ou si ce calque Ci subit un changement de transparence, alors le macrobloc MBₘ du mémoire tampon est recalculé. Ainsi, avec cette modélisation, on simplifie aussi l'étape E35 de composition de l'image d'affichage à partir des calques Ci. Dans l'étape E35 une image est composée par moyen des calques Ci en fonction d'information d'affichage transmis par le module d'application 321.

Dans l'étape E34 les données relatives au macrobloc Mbi dans la table "des modifications des macroblocs sont modifiées en conséquence des modifications du bloc Bi: dans la table on indique si le macrobloc MBₘa été modifié depuis l'image précédente, ainsi que les vecteurs de mouvement correspondant aux calques Ci qui ont induit une altération du macrobloc MBₘ par leur mouvement. Ainsi on peut constituer d'information d'encodage pour l'étape d'encodage

Un arbitrage est nécessaire si plusieurs calques Ci ont une translation simultanée différente. Dans ce cas, un critère sera employé pour utiliser le vecteur V_{d} le plus judicieux. Dans l'étape d'encodage on peut, par exemple, encoder le macrobloc MBₘi avec le vecteur de déplacement V_{d} de chaque calque Ci concerné et choisir celui pour lequel la compression de données est la plus efficace.

L'image composée par le module de modélisation 322 selon l'information d'affichage de l'application est ensuite transmis au module d'encodage 323 avec l'information d'encodage.

Dans l'étape E36 du procédé l'encodage est effectué par l'encodeur 323 à partir des informations d'encodage transmis par le module de modélisation 322 .

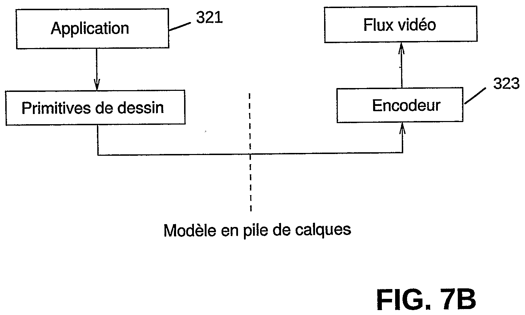

En se référant à la figure 7b la structure interne traditionnelle de l'encodeur vidéo 323 est conçue de manière de tirer partie des informations d'encodage transmises par le module de modélisation 322 .

Une partie dit "asynchrone" est intégrée avec l'application. Elle est donc synchronisée sur les actions de l'utilisateur. Cette partie du codeur 323 organise les données issues de l'application, afin de simplifier les calculs de la partie dite "synchrone" de l'encodage

Dans une étape de transformation DCT (discrète en cosinus), pour chaque macrobloc, chaque bloc constituant ce macrobloc est transformé à l'aide d'une transformation discrète en cosinus à 2 dimensions.

L'étape de transformation DCT est suivie par une étape de quantification. Cette étape consiste à diminuer le nombre de bits utilisés pour coder chaque coefficient résultat de la transformation DCT. L'étape de quantification est suivie d'une étape de codage entropique basé sur des codes à longueur variable.

Une étape de quantification inverse est l'opération inverse de la quantification PE4. Une étape de transformation DCT inverse est l'opération inverse de la transformation DCT. Ces étapes sont effectuées pour une phase d'estimation différentielle. Dans la phase d'estimation différentielle lorsqu'un macrobloc est encodé en mode différentiel, une différence entre l'image courante et l'image précédemment envoyée est effectuée, telle qu'elle sera décodée. Pour diminuer la quantité d'information à transmettre, un vecteur de translation est appliqué au macrobloc de l'image précédente afin qu'il s'approche au mieux de l'image courante. La recherche de ce vecteur est appelée « recherche des vecteurs de mouvement ». Cette différence est ensuite transformée, quantifiée puis encodée.

Le flux vidéo composé des images encodées en conformité avec l'information d'encodage correspondante sort de l'encodeur 323 et est envoyé au terminal 310 par un lien H324m dans une étape E37.

La transmission du flux vidéo se faisant par l'intermédiaire d'ondes radio, il est probable que lors de la session des paquets soient perdus. Il faut donc veiller à ce que chaque macrobloc MBₘ de l'image soit régulièrement encodé en mode intra. Ceci est fait en parallèle, avec un motif de rafraîchissement qui sera adapté à la bande passante disponible, à la réactivité souhaitée, ainsi qu'au niveau de robustesse à la perte de paquets souhaitée. Ce motif peut consister en un macrobloc par image, un macrobloc par "group of blocs", tous les macroblocs d'un "group of blocs" sur deux etc...

La synchronisation entre l'application et l'encodeur devrait être effectuée avec soin. Notamment, une fois l'image encodée, les blocs marqués comme modifiés par l'application peuvent être marqués comme non-modifiés avant que l'application ne reprenne la main.

Le terminal 310 reçoit le flux vidéo et le décode a l'aide du décodeur 312 pour afficher L'interface utilisateur défini par le flux vidéo sur l'écran 311.

Un quatrième mode de réalisation de l'invention propose une méthode permettant, en une seule étape, de filmer enregistrer et diffuser une séquence vidéo et/ou des données audio avec un terminal mobile.

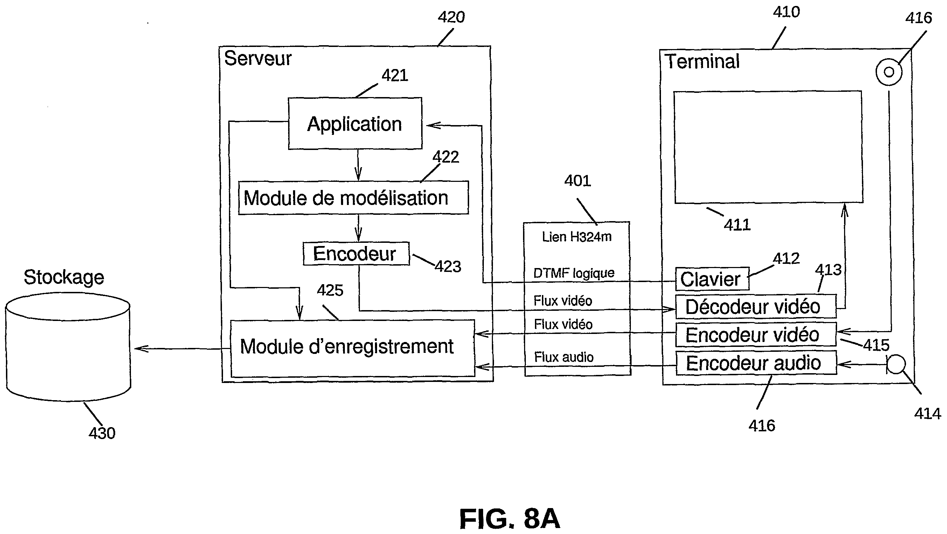

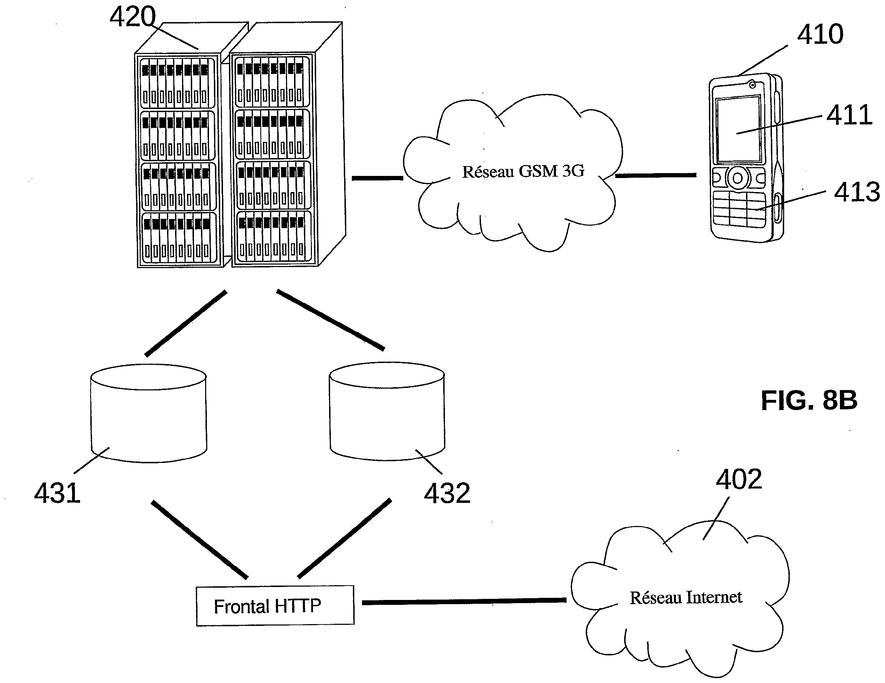

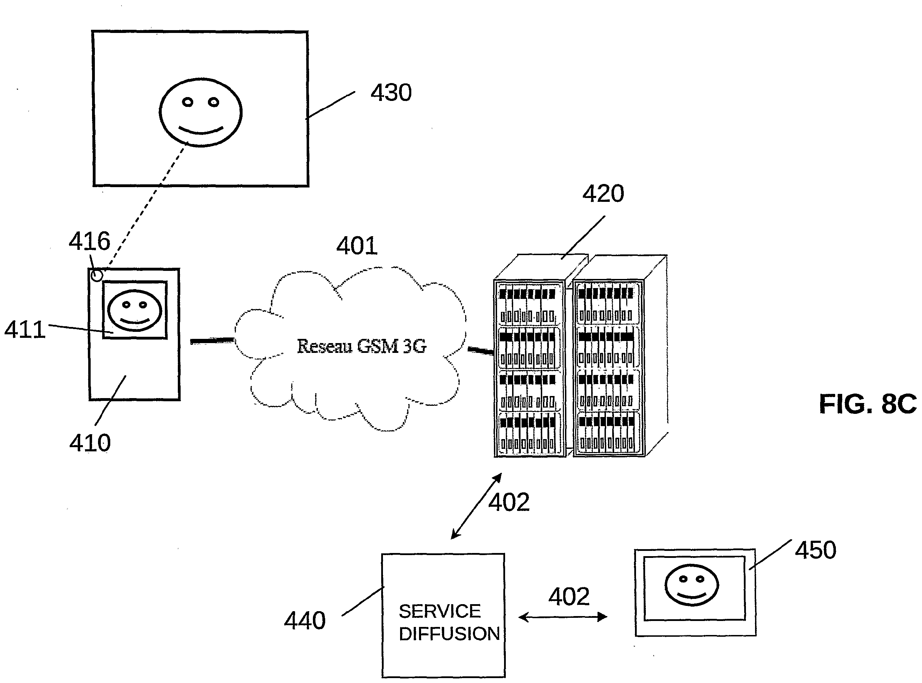

Dans ce mode de réalisation de l'invention illustré aux figures 8A à 8C un terminal 110 et un serveur 420 se communiquent par moyen d'un réseau 401 de type GSM 3G. Le terminal 410 comporte un décodeur vidéo 413, un clavier de touches 412 and un écran 411. Le terminal 410 est équipé d'un module camera 416 et un microphone 414 permettant de capter des séquences d'images et du son accompagnant les séquences d'images, ainsi que un encodeur vidéo 415 et un encodeur audio 416 pour encoder respectivement un flux vidéo et un flux audio pour transmission vers le serveur 420 par l'intermédiaire d'un lien audiovisuel du protocole H324m 401.

Le serveur 420 comporte un module d'application 421, un module de modélisation 422, un encodeur pour encoder un flux vidéo, et un module d'enregistrement 425 pour enregistrer un flux audio et/ou un flux vidéo de la voie remontante du terminal 410. Le module d'application d'enregistrement 425 a accès à deux bases de données : une première base de données 431 stockant les profils utilisateurs et une deuxième base de données 432 stockant le contenu audio-visuel reçu d'un terminal mobile et enregistré. Les données correspondent aux profils d'utilisateurs peuvent inclure des données identifiant au moins un compte de réseautage social et/ou un compte de service de diffusion des séquences audio/vidéo auxquels l'utilisateur est abonné. Bien entendu les données des profils utilisateurs et le contenu audio-visuel peuvent être stockés dans la même base de données 430. Le module de modélisation 422 et l'encodeur 423 fonctionnent de la même manière que le module de modélisation 322 et l'encodeur 323 du troisième mode de réalisation décrits ci-dessus.

L'application d'enregistrement 425 peut mettre à profit des fonctionnalités permettant d'afficher sur l'écran 411 du terminal 410 une interface intuitive lui permettant de commander le début et la fin de l'enregistrement, de donner un nom à la séquence et de la mettre en ligne.

L'application d'enregistrement peut également mettre à profit le numéro de l'appelant reçu au sein du serveur d'application 420 afin de créer un lien entre la séquence enregistrée et l'utilisateur qui l'a créée. Le profil utilisateur peut permettre de différentier, par exemple, les vidéos publiques des vidéos privées.

L'application d'enregistrement, sur le serveur 420, peut utiliser un logiciel de transcodage en temps réel vers un format lisible par un reproducteur de type PC des données audiovisuelles, par exemple, le format Flash etc. Il est ainsi possible de diffuser en ligne la séquence captée par le terminal en temps réel avec très léger différé.

L'utilisateur du terminal 410 enregistre une séquence audiovisuelle d'une scène 430. Il consulte une interface utilisateur générée par le serveur 420 et affiché sur l'écran 411 du terminal 410 pour commander le début et la fin d'enregistrement et de donner un nom à la séquence enregistré. Bien entendu la séquence peut être envoyée sans être enregistrée sur le terminal. Les données audiovisuelles de la scène enregistrées par le terminal sont ensuite envoyées via le réseau 401 au serveur 420. Sur le serveur 420 le module d'enregistrement 425 enregistre les données audiovisuelles et le numéro identifiant du terminal 410 et crée ainsi un lien entre les données audiovisuelles et l'utilisateur. La séquence est transcodée en temps réel vers un format Flash, par exemple, et puis envoyée par un réseau internet à un service de diffusion en ligne 440. La séquence de la scène 430 enregistrée peut être diffusée et ainsi visualisée depuis le terminal 410 et d'autres terminaux comme par exemple un ordinateur personnel 450. La diffusion de la séquence audiovisuelle correspondant aux données vidéo et/ ou audio est contrôlée par l'intermédiaire du lien audiovisuel sans fil entre le terminal 410 et le serveur 420.

Le serveur 420 crée une url aléatoire unique permettant de pointer sur ces données vidéo et/ou audio transmises. Ensuite un message texte contenant l'url aléatoire unique peut être envoyé sur un compte personnel d'un site Web de réseautage social de l'utilisateur, tel qu'un compte twitter.com ou un compte facebook, par exemple, permettant ainsi aux amis de l'utilisateur d'accéder à la séquence audiovisuelle

Une fois la séquence audiovisuelle téléchargée vers le service de diffusion, l'utilisateur peut communiquer l'URL automatiquement générée aux personnes vers lesquelles il voudra diffuser sa séquence. Pour cela il peut communiquer cette URL à ses amis par l'intermédiaire d'un email ou d'un message sur un service de réseau social comme twitter ou facebook.

Ainsi le système permet à un utilisateur d'un terminal mobile de filmer et mettre en ligne très rapidement des séquences imprévues. Il permet aussi de visualiser ces séquences depuis un téléphone mobile 3G Visio avec les avantages d'interopérabilité et de temps d'accès.

Dans un mode de réalisation de l'invention le serveur 420 peut être agencé pour diffuser en ligne des séquences audio/vidéo sans passer par un service de diffusion indépendant du serveur.

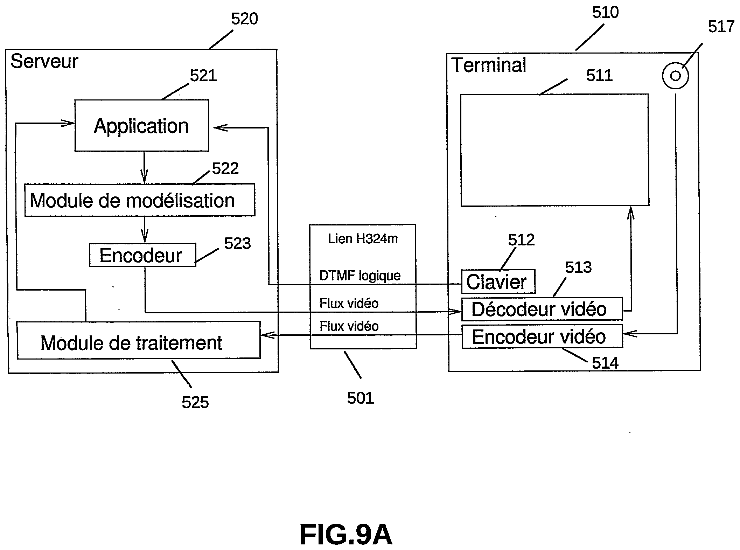

Dans un cinquième mode de réalisation de l'invention illustré aux figures 9A à 9C un terminal 510 et un serveur 520 se communiquent par moyen d'un réseau 501 de type GSM 3G avec un lien H324m. Le terminal 510 est équipé d'un module d'encodage vidéo 514, un décodeur vidéo 513, un clavier de touches 512, une camera 517 and un écran 511.

Le serveur 520 comporte un module d'application 521, un module de modélisation 522 et un encodeur 523. Le module d'application 521, le module de modélisation 522 et l'encodeur 523 fonctionnent de la même manière que le module d'application, le module de modélisation et l'encodeur du troisième mode de réalisation décrits ci-dessus. Le serveur 520 comporte en outre un module de traitement 525 pour décoder et traiter un flux vidéo reçu du terminal 510.

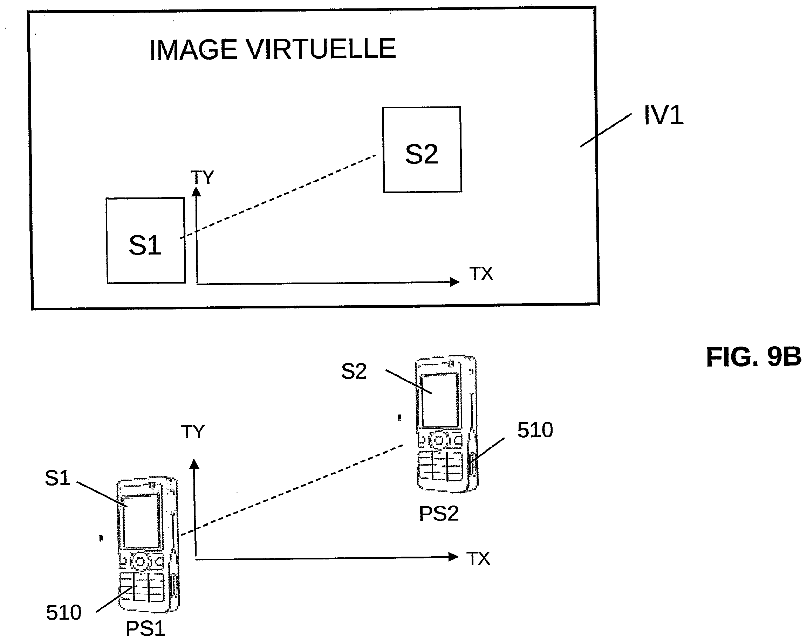

Dans ce mode de réalisation de l'invention illustre à la figure 9B le serveur 520 reçoit un flux vidéo produit par un téléphone mobile 3G Visio 510. Ce flux, s'il est encodé dans les règles de l'art, contient les vecteurs de mouvement Vm calculés par le module d'encodage 514 du téléphone mobile 510 dans le but de compresser la séquence vidéo.

En plus d'être utilisés pour décompresser la séquence vidéo, ces vecteurs de mouvement Vm peuvent être utilisés pour estimer les mouvements du combiné téléphonique 510.

En se référant à la figure 9b les vecteurs de mouvement Vm peuvent être traités par le module du traitement 515 du serveur 520 pour déterminer que le téléphone mobile 510 s'est déplace d'une position PS1 à une nouvelle position PS2. En fonction de ce mouvement le serveur d'application 520 envoie un affichage S1 correspondant à une première partie d'une image virtuelle IV1 lorsque le terminal est à une position PS1, et puis lorsque le serveur 520 détecte que le terminal 510 s'est déplacé à une position PS2 le serveur 520 envoie une affichage S2 correspondant à une deuxième partie de l'image virtuelle IV1

Ainsi, sans calculs supplémentaires dans le combiné téléphonique 510 ou sur le serveur 520, et sans installation d'une application supplémentaire sur le téléphone 510, les images présentées à l'utilisateur sur l'écran 511 du téléphone peuvent rendre compte de ses mouvements et lui permettre de naviguer sur une image virtuelle de taille supérieure à celle de son écran physique 511 comme par exemple une carte, une liste de choix etc.

De plus, un mouvement vers la droite du combiné peut, par exemple, signifier le passage à une image suivante dans le cas de la visualisation d'un album photo. Le mouvement du combiné peut être utilisé pour faire bouger un pointeur sur l'écran (comme une souris sur l'ordinateur).

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

En variantes par exemple on pourrait bien sûr envisager que la première mode de réalisation comporte des caractéristiques des autres modes de réalisation. Par exemple, dans des variantes le serveur selon la première, deuxième, quatrième ou cinquième mode de réalisation peut être équipé d'un module de modélisation et un encodeur selon la troisième mode de réalisation.

De plus, dans d'autres variantes, le terminal selon la troisième, quatrième ou cinquième mode de réalisation de l'invention peut être équipé d'un pointeur selon la deuxième mode de réalisation de lineation.

Dans d'autres variantes le serveur selon la première, deuxième, troisième, cinquième mode de réalisation de l'invention peut être équipé d'un module d'enregistrement selon la quatrième mode de réalisation pour permettre de mettre directement en ligne des données audiovisuel captées par un terminal.

Dans d'autres variantes le serveur selon première, deuxième, troisième ou quatrième mode de réalisation de l'invention peut être équipé d'un module de traitement selon la cinquième mode de réalisation pour permettre de déterminer des mouvements d'un terminal en fonction des vecteurs de mouvement des données vidéo.

On notera que l'invention ne se limite pas à une implantation purement logicielle (séquence d'instructions d'un programme informatique), mais qu'elle peut aussi être mise en oeuvre sous une forme matérielle ou toute forme mixant une partie matérielle et une partie logicielle. Dans le cas où l'invention est implantée partiellement ou totalement sous forme logicielle, la séquence d'instructions correspondante pourra être stockée dans un moyen de stockage amovible (tel que par exemple une disquette, un CD-ROM, un DVD-ROM etc.) ou non amovible, ce moyen de stockage étant lisible partiellement ou totalement par un ordinateur ou un microprocesseur.

## Revendications

1. Procédé de modélisation d'un affichage issu d'une application sur un serveur (120 ; 220 ; 320 ; 420 ; 520), l'affichage étant destiné à un terminal distant (110 ; 210 ; 310 ; 410 ; 510) ; tel que
l'affichage est modélisé pour composer une image en fonction d'une information d'affichage issue de l'application, au moyen de calques superposés,
chaque calque étant composé de pixels calques, et étant associé à un premier ensemble de données de modification correspondant,
les pixels calques étant groupés en blocs de pixels calques, chaque pixel calque étant **caractérisé par** un facteur de transparence Ttp dudit pixel;
le premier ensemble de données de modification comportant pour chaque calque un vecteur de mouvement dudit calque et des données de transparence dudit calque,
l'image résultante étant composée de pixels images et étant associée à un deuxième ensemble de données de modification,
les pixels images étant groupés en macroblocs,
le deuxième ensemble de données de modification indiquant si les macroblocs de l'image ont été modifiés du fait des modifications des calques par l'application,
les pixels images étant composés des pixels superposés correspondants des calques ; le procédé comprenant les étapes suivantes :
modification du contenu des pixels calques d'au moins un calque par au moins une primitive selon l'information d'affichage reçue de l'application ;
modification du premier ensemble des données de modification pour au moins un calque selon les modifications effectuées par la ou les primitives ;
modification du deuxième ensemble de données en fonction du premier ensemble de données ;
composition d'une image en fonction des pixels des calques, les données de transparence correspondent à un bloc d'un calque affectant un macrobloc de l'image composée étant utilisées pour déterminer si ledit macrobloc de l'image a été modifié par rapport au macrobloc de l'image précédent; et
transmission à un encodeur de l'image à encoder et d'une information d'encodage conformément au deuxième ensemble des données de modifications.

2. Procédé selon la revendication 1 dans lequel les données de transparence d'un calque comprennent un facteur de transparence dudit calque et une indication de transparence pour chaque bloc dudit calque, l'indication de transparence indiquant si ledit bloc est complètement transparent, complètement opaque ou ni l'un ni l'autre.

3. Procédé selon la revendication 1 ou 2 dans lequel le premier ensemble de données de modification comporte en outre des données de modification indiquant pour chaque bloc de pixels dudit calque si ledit bloc a été modifié par l'application.

4. Procédé selon l'une quelconque des revendications précédentes **caractérisé en ce que** l'étape de modification du deuxième ensemble de données de modification comprend pour chaque macrobloc de pixels de l'image à encoder, une recherche dans le premier ensemble de données, des blocs de pixels des calques affectant le macrobloc qui ont été modifiés par l'application afin de déterminer si le macrobloc de pixels de l'image à encoder a été modifié.

5. Procédé selon la revendication 3 ou 4 dans lequel si le premier ensemble de données de modification indique qu'un bloc d'un calque affectant un macrobloc de l'image composée a été modifié par l'application, ou si ledit bloc du calque n'est pas totalement transparent et le calque auquel il appartient subit un mouvement, ou si le facteur de transparence dudit calque indique que le calque subit un changement de transparence alors le macrobloc de l'image est recomposé.

6. Procédé selon l'une quelconque des revendications précédentes dans lequel le deuxième ensemble de données de modification inclut un vecteur de mouvement pour chaque macrobloc de pixels de l'image pour utilisation dans un encodage différentiel, le vecteur de mouvement étant déterminé en fonction des vecteurs de déplacement des calques dont au moins un bloc a induit une altération dudit macrobloc.

7. Procédé selon la revendication 6 **caractérisé en ce que** si plusieurs calques utilisés pour composer l'image ont eu une translation simultanée le vecteur de déplacement Vd pour l'encodage est choisi parmi des vecteurs de déplacement des calques qui ont eu une translation selon un critère prédéterminé.

8. Procédé selon l'une quelconque des revendications précédentes **caractérisé en ce que** le deuxième ensemble de données de modification indique pour chaque macrobloc de pixels si ledit macrobloc a été modifié depuis l'image précédente, et dans lequel seuls les macroblocs modifiés sont ensuite encodés par l'encodeur.

9. Procédé d'encodage d'une image, le procédé comprenant
réception d'une image et une information d'encodage pour encoder l'image, l'image et l'information d'encodage étant générées par le procédé selon l'une quelconque des revendication précédentes
encodage de l'image à l'aide de l'information d'encodage.

10. Procédé selon la revendication 9 **caractérisé en ce que** chaque macrobloc est régulièrement encodé en mode intra pour transmission vers le terminal.

11. Dispositif de modélisation d'un affichage issu d'une application sur un serveur (120 ; 220 ; 320 ; 420 ; 520), l'affichage étant destiné à un terminal distant (110 ; 210 ; 310 ; 410 ; 510); tel que
l'affichage est modélisé pour composer une image en fonction d'une information d'affichage issue de l'application, au moyen de calques superposés,
chaque calque étant composé de pixels calques et étant associé à un premier ensemble de données de modification correspondant,
les pixels calques étant groupés en blocs de pixels calques, chaque pixel calque étant **caractérisé par** un facteur de transparence Ttp dudit pixel ;
le premier ensemble de données de modification comportant pour chaque calque un vecteur de mouvement dudit calque et des données de transparence dudit calque,
l'image résultante étant composée de pixels images et étant associée à un deuxième ensemble de données de modification,
le deuxième ensemble de données de modification indiquant si les macroblocs de l'image ont été modifiés du fait des modifications des calques par l'application,
les pixels images étant composés des pixels superposés correspondants des calques ; le procédé comprenant les étapes suivantes :
des moyens (122; 322 ; 422 ; 522) pour modifier le contenu d'au moins un calque par au moins une primitive selon l'information d'affichage reçue de l'application ;
des moyens (122; 322 ; 422 ; 522) pour modifier le premier ensemble des données de modification pour au moins un calque selon les modifications effectuées par la ou les primitives ;
des moyens (122 ; 322 ; 422 ; 522) pour modifier le deuxième ensemble de données en fonction du premier ensemble de données ;
des moyens (122 ; 322 ; 422 ; 522) pour composer une image en fonction du contenu des calques, les données de transparence correspondent à un bloc d'un calque affectant un macrobloc de l'image composée étant utilisées pour déterminer si ledit macrobloc de l'image a été modifié par rapport au macrobloc de l'image précédent; et
des moyens pour transmettre à un encodeur (123 ; 323 ; 423 ; 523) l'image à encoder et une information d'encodage conformément au deuxième ensemble des données de modifications.

12. Programme informatique, pour la mise en oeuvre du procédé selon l'une des revendications 1 à 10, téléchargeable via un réseau de télécommunication et/ou stocké dans une mémoire d'un dispositif de traitement et/ou stocké sur un support mémoire destiné à coopérer avec un dispositif de traitement.

13. Un encodeur (123 ; 323 ; 423 ; 523) agencé pour recevoir une image générée par le procédé selon l'une des revendications 1 à 10 et une information d'encodage générée par le procédé selon l'une des revendications 1 à 10, l'encodeur étant agencé de manière à' encoder l'image à l'aide de l'information d'encodage.

14. Un encodeur (123 ; 323 ; 423 ; 523) selon la revendication 13 agencé pour encoder chaque macrobloc de l'image régulièrement en mode intra pour transmission vers le terminal.

## Patentansprüche

1. Verfahren zur Modellierung einer Anzeige aus einer Anwendung auf einem Server (120; 220; 320; 420; 520), wobei die Anzeige für ein entferntes Endgerät (110; 210; 310; 410; 510) vorgesehen ist; so dass
die Anzeige so modelliert ist, dass sie ein Bild in Abhängigkeit von einer Anzeigeinformation aus der Anwendung vermittels überlagerter Textebenen zusammensetzt,
wobei jede Ebene aus Ebenenbildpunkten besteht, und einem ersten Satz entsprechender Änderungsdaten zugeordnet ist,
wobei die Ebenenbildpunkte zu Blöcken von Ebenenbildpunkten gruppiert sind, wobei jeder Ebenenbildpunkt durch einen Transparenzfaktor Ttp des Bildpunkts gekennzeichnet ist;
wobei der erste Änderungsdatensatz für jede Ebene einen Bewegungsvektor der Ebene und Transparenzdaten der Ebene umfasst,
wobei das resultierende Bild aus Bildpunkten zusammengesetzt und einem zweiten Änderungsdatensatz zugeordnet ist,
wobei die Bildpunkte in Makroblöcke gruppiert sind,
wobei der zweite Änderungsdatensatz anzeigt, ob die Makroblöcke des Bildes infolge der Änderungen der Ebenen durch die Anwendung geändert wurden,
wobei die Bildpunkte aus den entsprechenden überlagerten Bildpunkten der Ebenen zusammengesetzt sind; wobei das Verfahren die folgenden Schritte umfasst:
Änderung des Inhalts der Ebenenbildpunkte zumindest einer Ebene durch zumindest eine Stammfunktion nach der von der Anwendung empfangenen Anzeigeinformation;
Änderung des ersten Änderungsdatensatzes für zumindest eine Ebene nach den von der oder den Stammfunktion (en) durchgeführten Änderungen;
Änderung des zweiten Datensatzes nach dem ersten Datensatz;
Zusammensetzung eines Bildes gemäß den Ebenenbildpunkten, wobei die Transparenzdaten einem Block einer Ebene entsprechen, der einen Makroblock des zusammengesetzten Bildes beeinflusst, zum Bestimmen benutzt werden, ob der Makroblock des Bildes in Bezug auf den Makroblock des vorherigen Bildes geändert wurde; und
Sendung des zu codierenden Bildes und einer Codierinformation gemäß dem zweiten Änderungsdatensatz an einen Codierer.

2. Verfahren nach Anspruch 1, wobei die Transparenzdaten einer Ebene einen Transparenzfaktor der Ebene und eine Transparenzangabe für jeden Block der Ebene umfassen, wobei die Transparenzangabe anzeigt, ob der Block vollständig transparent, vollständig undurchsichtig oder weder das eine noch das andere ist.

3. Verfahren nach Anspruch 1 oder 2, wobei der erste Änderungsdatensatz ferner Änderungsdaten umfasst, die für jeden Bildpunktblock der Ebene angeben, ob der Block durch die Anwendung geändert wurde.

4. Verfahren nach einem der vorstehenden Ansprüche, **dadurch gekennzeichnet, dass** der Schritt mit der Änderung des zweiten Änderungsdatensatzes für jeden Bildpunkt-Makroblock des zu codierenden Bildes eine Suche im ersten Datensatz nach Bildpunktblöcken der Ebenen umfasst, die den Makroblock beeinflussen, die durch die Anwendung geändert wurden, um zu ermitteln, ob der Bildpunkt-Makroblock des zu codierenden Bildes geändert wurde.

5. Verfahren nach der Anspruch 3 oder 4, wobei, wenn der erste Änderungsdatensatz angibt, dass ein Block einer Ebene, der einen Makroblock des zusammengesetzten Bildes beeinflusst, durch die Anwendung geändert wurde, oder wenn der Block der Ebene nicht vollständig transparent ist und die Ebene, zu der er gehört, eine Bewegung erfährt, oder wenn der Transparenzfaktor der Ebene angibt, dass die Ebene eine Transparenzveränderung erfährt, dann wird der Makroblock des Bildes neu zusammengesetzt.

6. Verfahren nach einem der vorstehenden Ansprüche, wobei der zweite Änderungsdatensatz einen Bewegungsvektor für jeden Bildpunkt-Makroblock des Bildes zur Verwendung in einer differentiellen Codierung enthält, wobei der Bewegungsvektor je nach den Verschiebungsvektoren der Ebenen bestimmt ist, von denen zumindest ein Block eine Änderung des Makroblocks induziert hat.

7. Verfahren nach Anspruch 6, **dadurch gekennzeichnet, dass**, wenn mehrere zur Bildzusammensetzung verwendete Ebenen eine gleichzeitige Verschiebung erfahren haben, der Verschiebungsvektor Vd zur Codierung unter den Verschiebungsvektoren der Ebenen ausgewählt wird, die eine Verschiebung nach einem vorgegebenen Kriterium erfahren haben.

8. Verfahren nach einem der vorstehenden Ansprüche, **dadurch gekennzeichnet, dass** der zweite Änderungsdatensatz für jeden Bildpunkt-Makroblock angibt, ob der Makroblock seit dem vorherigen Bild geändert wurde, und wobei nur die geänderten Makroblöcke dann vom Codierer codiert werden.

9. Verfahren zum Codieren eines Bildes, wobei das Verfahren umfasst
Empfangen eines Bildes und die Codierungsdaten zum Codieren des Bildes, wobei das Bild und die Codierungsdaten durch das Verfahren nach einem der vorstehenden Ansprüche erzeugt werden,
Codieren des Bildes unter Verwendung der Codierungsdaten.

10. Verfahren nach Anspruch 9, **dadurch gekennzeichnet, dass** jeder Makroblock regelmäßig im Intra-Modus zur Sendung an das Endgerät codiert wird.

11. Vorrichtung zur Modellierung einer Anzeige aus einer Anwendung auf einem Server (120; 220; 320; 420; 520), wobei die Anzeige für ein entferntes Endgerät (110; 210; 310; 410; 510) vorgesehen ist; so dass
die Anzeige so modelliert ist, dass sie ein Bild in Abhängigkeit von einer Anzeigeinformation aus der Anwendung vermittels überlagerter Textebenen zusammensetzt,
wobei jede Ebene aus Ebenenbildpunkten besteht und einem ersten entsprechenden Änderungsdatensatz zugeordnet ist,
wobei die Ebenenbildpunkte zu Blöcken von Ebenenbildpunkten gruppiert sind, wobei jeder Ebenenbildpunkt durch einen Transparenzfaktor Ttp des Bildpunkts gekennzeichnet ist;
wobei der erste Änderungsdatensatz für jede Ebene einen Bewegungsvektor der Ebene und Transparenzdaten der Ebene umfasst,
wobei das resultierende Bild aus Bildpunkten zusammengesetzt und einem zweiten Änderungsdatensatz zugeordnet ist,
wobei der zweite Änderungsdatensatz anzeigt, ob die Makroblöcke des Bildes infolge der Änderungen der Ebenen durch die Anwendung geändert wurden,
wobei die Bildpunkte aus den entsprechenden überlagerten Bildpunkten der Ebenen zusammengesetzt sind; wobei das Verfahren die folgenden Schritte umfasst:
Mittel (122; 322; 422; 522) zur Änderung des Inhalts zumindest einer Ebene durch zumindest eine Stammfunktion nach der von der Anwendung empfangenen Anzeigedaten;
Mittel (122; 322; 422; 522) zur Änderung des ersten Änderungsdatensatzes für zumindest eine Ebene nach den von der oder den Stammfunktion(en) durchgeführten Änderungen;
Mittel (122; 322; 422; 522) zur Änderung des zweiten Datensatzes nach dem ersten Datensatz;
Mittel (122; 322; 422; 522) zur Zusammensetzung eines Bildes gemäß dem Inhalt der Ebenen, wobei die Transparenzdaten einem Block einer Ebene entsprechen, der einen Makroblock des zusammengesetzten Bildes beeinflusst, zum Bestimmen benutzt werden, ob der Makroblock des Bildes in Bezug auf den Makroblock des vorherigen Bildes geändert wurde; und
Mittel (123; 323; 423; 523) zur Sendung des zu codierenden Bildes und einer Codierinformation gemäß dem zweiten Änderungsdatensatz an einen Codierer.

12. Computerprogramm zur Durchführung des Verfahrens nach einem der Ansprüche 1 bis 10, das über ein Telekommunikationsnetz herunterladbar und/oder in einem Speicher einer Verarbeitungsvorrichtung gespeichert und/oder auf einem Speichermedium zur Zusammenarbeit mit einer Verarbeitungsvorrichtung gespeichert ist.

13. Codierer (123; 323; 423; 423; 523), der so gestaltet ist, dass er ein durch das Verfahren nach einem der Ansprüche 1 bis 10 erzeugtes Bild und eine Codierinformation empfängt, die durch das Verfahren nach einem der Ansprüche 1 bis 10 erzeugt wird, wobei der Codierer so gestaltet ist, dass er das Bild mit Hilfe der Codierinformation codiert.

14. Codierer (123; 323; 423; 523) nach Anspruch 13, der so gestaltet ist, dass er jeden Makroblock des Bildes regelmäßig im Intra-Modus zur Sendung an das Endgerät codiert.

## Claims

1. A method for modeling a display coming from an application on a server (120; 220; 320; 420; 520), the display being destined for a remote terminal (110; 210; 310; 410; 510); such that
the display is modeled to compose an image based on display information coming from the application, by means of stacked layers,
each layer consisting of layer pixels and being associated with a corresponding first alteration data set,
the layer pixels being grouped into layer pixel blocks, each layer pixel being **characterized by** a transparency factor Ttp of said pixel;
the first alteration data set comprising, for each layer, a motion vector of said layer and transparency data of said layer,
the resulting image consisting of image pixels and being associated with a second alteration data set,
the image pixels being grouped into macroblocks,
the second alteration data set indicating whether the image macroblocks were altered due to alterations of the layers by the application,
the image pixels consisting of the corresponding stacked pixels of the layers; the method comprising the following steps:
alteration of the content of the layer pixels of at least one layer by at least one primitive according to the display information received from the application;
alteration of the first alteration data set for at least one layer according to the alterations performed by the primitive(s);
alteration of the second alteration data set according to the first data set;
composition of an image based on the layer pixels, the transparency data corresponding to a block of a layer affecting a macroblock of the composite image being used to determine whether said image macroblock was altered with respect to the macroblock of the preceding image; and
transmission to an encoder of the image to be encoded and of encoding information in compliance with the second alteration data set.

2. The method according to claim 1, wherein the transparency data of a layer comprise a transparency factor of said layer and a transparency indication for each block of said layer, the transparency indication indicating whether said block is completely transparent, completely opaque or neither.

3. The method according to claim 1 or 2, wherein the first alteration data set further comprises alteration data indicating for each pixel block of said layer whether said block was altered by the application.

4. The method according to any one of the preceding claims, **characterized in that** the step of altering the second alteration data set comprises, for each pixel macroblock of the image to be encoded, a search within the first data set for layer pixel blocks affecting the macroblock which have been altered by the application, to determine whether the pixel macroblock of the image to be encoded has been altered.

5. The method according to claim 3 or 4, wherein, if the first alteration data set indicates that a layer block affecting a macroblock of the composite image was altered by the application, or if said layer block is not totally transparent and the layer to which it belongs is undergoing movement, or if the transparency factor of said layer indicates that the layer is undergoing a change in transparency, then the image macroblock is recomposed.

6. The method according to any one of the preceding claims, wherein the second alteration data set includes a motion vector for each pixel macroblock of the image for use in a differential encoding, the motion vector being determined based on the displacement vectors of the layers of which at least one block has induced an alteration in said macroblock.

7. The method according to claim 6, **characterized in that**, if several layers used to compose the image have undergone simultaneous translation, the displacement vector Vd for encoding is selected from among the displacement vectors of the layers which have undergone translation, according to a predetermined criterion.

8. The method according to any one of the preceding claims, **characterized in that** the second alteration data set indicates, for each pixel macroblock, whether said macroblock was altered from the preceding image, and wherein only the altered macroblocks are then encoded by the encoder.

9. A method for encoding an image, the method comprising reception of an image and encoding information for encoding the image, the image and the encoding information being generated by the method according to any one of the preceding claims
encoding the image using the encoding information.

10. The method according to claim 9, **characterized in that** each macroblock is encoded in the regular way in intracall mode for transmission to the terminal.

11. A modeling device for a display coming from an application on a server (120; 220; 320; 420; 520), the display being destined for a remote terminal (110; 210; 310; 410; 510); such that
the display is modeled to compose an image based on display information coming from the application, by means of stacked layers,
each layer consisting of layer pixels and being associated with a corresponding first alteration data set,
the layer pixels being grouped into layer pixel blocks, each layer pixel being **characterized by** a transparency factor Ttp of said pixel;
the first alteration data set comprising for each layer a motion vector of said layer and the transparency data of said layer,
the resulting image consisting of image pixels and being associated with a second alteration data set,
the second alteration data set indicating whether the image macroblocks were altered due to alterations of the layers by the application,
the image pixels consisting of the corresponding stacked pixels of the layers; the method comprising the following steps:
means (122; 322; 422; 522) for altering the content of at least one layer by at least one primitive according to the display information received from the application;
means (122; 322; 422; 522) for altering the first alteration data set for at least one layer according to the alterations performed by the primitive(s);
means (122; 322; 422; 522) for altering the second data set according to the first data set;
means (122; 322; 422; 522) for composing an image based on the content of the layers, the transparency data corresponding to a block of a layer affecting a macroblock of the composite image being used to determine whether said image macroblock was altered with respect to the macroblock of the preceding image; and
means for transmitting to an encoder (123; 323; 423; 523) the image to be encoded and encoding information in compliance with the second alteration data set.

12. A software program for implementing the method according to any one of claims 1 to 10, downloadable via a telecommunication network and/or stored in a memory of a processing device and/or stored in a memory medium designed to cooperate with a processing device.

13. An encoder (123; 323; 423; 523) designed to receive an image generated by the method according to any one of claims 1 to 10 and an encoding information generated by the method according to any one of claims 1 to 10, the encoder being designed so as to encode the image using the encoding information.

14. The encoder (123; 323; 423; 523) according to claim 13, designed to encode each image macroblock in the regular way in intracall mode for transmission to the terminal.
